(19) Europäisches Patentamt
European Patent Office
Office européen des brevets

(11) **EP 4 769 061 A1**

(12) **EUROPEAN PATENT APPLICATION**
published in accordance with Art. 153(4) EPC

(43) Date of publication:
**01.07.2026 Bulletin 2026/27**

(21) Application number: **24870700.2**

(22) Date of filing: **24.09.2024**

(51) International Patent Classification (IPC):
**G06F 1/12** $^{(2006.01)}$

(52) Cooperative Patent Classification (CPC):
**G06F 1/12**

(86) International application number:
**PCT/CN2024/120676**

(87) International publication number:
**WO 2025/067156 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311258830**
**27.09.2023 CN 202311258934**

(71) Applicant: **Neuracle Technology (Shanghai) Co., Ltd.**
**Shanghai 200120 (CN)**

(72) Inventors:
• **XU, Honglai**
**hangzhou, Jiangsu 213164 (CN)**
• **HUANG, Xiaoshan**
**hangzhou, Jiangsu 213164 (CN)**
• **XUE, Shuo**
**hangzhou, Jiangsu 213164 (CN)**
• **GONG, Changhui**
**hangzhou, Jiangsu 213164 (CN)**
• **JI, Zhiqiang**
**hangzhou, Jiangsu 213164 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **SINGLE-DEVICE MULTI-PHYSIOLOGICAL-PARAMETER SYNCHRONIZATION AND FUSION METHOD AND MULTI-DEVICE MULTI-PHYSIOLOGICAL-PARAMETER SYNCHRONIZATION APPARATUS**

(57) The present disclosure relates to the field of bio-information technologies, in particular to a single-device multi-physiological-parameter synchronization and fusion method and a multi-device multi-physiological-parameter synchronization device. The single-device multi-physiological-parameter synchronization and fusion method includes the following steps: constructing a one-to-one wireless transmission system; constructing a one-to-many wired transmission system; initiating a synchronization instruction; checking information; matching information to align first collection data packets of the sensor modules. In the present disclosure, the master collection control module sends synchronization information to multiple sensor modules at the same time, and the master collection control module, based on multiple pieces of timestamp information, maps the collection data packets sent from the multiple sensor modules by time mapping, without requiring multiple sensor modules to be series-connected through a same clock source. In this case, the sensor models are not limited and real-time adjustment can be made to the sampling rate, ensuring high synchronization efficiency between multiple sensor modules.

[FIG. 4]

**Description**

This application claims priority to Chinese Patent Application No. 202311258830.X, filed on September 27, 2023, and Chinese Patent Application No. 202311258934.0, filed on September 27, 2023, each of which is incorporated herein by reference in its entirety.

**TECHNICAL FIELD**

The present disclosure relates to the field of bio-information technologies, in particular to a single-device multi-physiological-parameter synchronization and fusion method and a multi-device multi-physiological-parameter synchronization device.

BACKGROUND TECHNOLOGY

The Event-Related Potential (ERP) is electroencephalography (EEG) evoked by specific stimuli, which reflects neuroelectrophysiological changes in the brains during cognitive processes under stimulation. In the collection process of EEG signals, there usually is a strict time-locked relationship between the events and the data, for example, the ERP and the phase-related steady-state visual evoked potential. Therefore, while the EEG data is recorded, it is required to accurately record an occurrence time of the event, with the time error of the event and the data to be $\pm$1ms.

The single device refers to a collection device capable of independently collecting multi-modal physiological parameters of different types and different sampling rates such as EEG, EMG, ECG, EDA, pulse, or blood oxygen. In a single-device multi-physiological-parameter collection system, multiple sensors are disposed to obtain different physiological parameters. Due to mutual independence of sensor clock sources, the consistency of the sampling rates of the sensors is difficult to maintain. Even if same sensors are used, there may be a phase difference due to collection start being at different times. In the case of clock source deviation and phase difference, with increase of the collection time, there may be loss of temporal correlation between the data sequences of the sensors, and the temporal inconsistency of data of the multiple sensor modules enables all the collected and tested physiological parameters to lose its research value.

In the existing synchronization method of the single-device multi-physiological-parameter collection system, a same clock source is used to series-connect multiple sensors on hardware, and generate different sampling rates through a clock divider so as to realize data synchronization of multiple sensor modules. In use, one sensor can only set one corresponding initial sampling rate for the clock divider based on its own configuration parameters and cannot carry out real-time adjustment based on actual use situations or environmental changes, leading to low data synchronization efficiency of the multiple sensor modules. Further, the clock sources of most digital sensors are integrated inside and it is difficult to connect another clock source. Therefore, the existing collection system cannot realize data synchronization of the digital sensors with inside-integrated clock sources.

The working principle of the collection device of multi-modal physiological parameters is as follows: when the internal clock source of the collection device accumulates to a specific number of times, one signal measurement is triggered, and the processing on the measurement data is completed. When multiple collection devices of multi-modal physiological parameters are used and especially communicated by wireless transmission, since the collection devices work under respective clock sources, there is an inherent clock deviation between any pair of these clock sources, leading to deviation of the number of measurements triggered between the devices in a same natural time. When these data are analyzed, the deviated measurement number enables the data between the collection devices to lose temporal correlation.

In the prior arts, when the multi-device multi-parameter synchronization device performs multi-device data alignment synchronization, the central processing system, in each synchronization, needs to complete information interaction with the master clock and each slave clock. The interaction contents include prompting the slave clocks about synchronization to be initiated, controlling the master clock to initiate synchronization, and inquiring whether the slave clocks receive the synchronization instruction from the master clock. Since there are many interactions, when a slave clock fails to receive or receives, at timeout, the synchronization prompt from the central processing system due to wireless environment interference, the slave clock will miss receiving the synchronization signal initiated by the master clock, leading to synchronization loss of the slave clock; when the master clock fails to receive or receives, at timeout, the synchronization initiation instruction from the central processing system due to wireless environment interference, the master clock cannot generate a synchronization signal within this synchronization period, leading to synchronization loss of all slave clocks and inability to ensure synchronization stability. Furthermore, when there are many slave clock devices, it takes very much time to complete one synchronization flow due to tedious information interactions. Thus, the synchronization of all devices cannot be completed within one synchronization initiation period, leading to inability to further ensure the whole synchronization stability of the system in the existing solutions.

**CONTENT OF THE INVENTION**

The object of the present disclosure is to provide a single-device multi-physiological-parameter synchronization and fusion method and a multi-device multi-physiological-parameter synchronization device.

The technical solutions adopted by the present disclosure to solve the technical problems are as follows: a single-device multi-physiological-parameter synchronization and fusion method, including the following steps:

Constructing a one-to-one wireless transmission system, namely, forming a one-to-one relationship between a central processing system and a master collection control module;

Constructing a one-to-many wired transmission system, namely, constructing a wired connection between the master collection control module and multiple sensor modules;

Initiating a synchronization instruction, wherein the central processing system initiates a synchronization instruction to the master collection control module, and the master collection control module receives the synchronization instruction and then sends a first synchronization information packet to the multiple sensor modules and records a timestamp $T_{S0}$ corresponding to the first synchronization information packet;

Checking information, wherein the multiple sensor modules receive the first synchronization information packet and then check information, generate a second synchronization information packet after validating a check result, and transmit the second synchronization information packet to the master collection control module;

Matching information, wherein the master collection control module performs information matching on the second synchronization information packet and the timestamp $T_{S0}$ corresponding to the first synchronization information packet in a synchronization initiation period to align first collection data packets of the sensor modules.

In another aspect, the present disclosure further provides a collection system for the single-device multi-physiological-parameter synchronization and fusion method, including:

Multiple sensor modules, configured for collection and transmission of multiple physiological parameters;

A master collection control module with a synchronization clock unit, connected in a wired way to the multiple sensor modules to perform data synchronization alignment and fusion processing on the multiple sensor modules, wherein the synchronization clock unit sends a first synchronization information packet to the multiple sensor modules, and the master collection control module performs synchronization alignment and fusion processing on first collection data packets collected by the sensor modules to obtain second collection data packets;

A central processing system, configured to set parameters of the multiple sensor modules and the master collection control module, send a control instruction to the master collection control module and receive the second collection data packets.

In a third aspect, the present disclosure further provides a data alignment method of collection data packets, including the above collection system and including the following steps:

Constructing a one-to-one wireless transmission system, namely, forming a one-to-one relationship between a central processing system and a master collection control module;

Constructing a one-to-many wired transmission system, namely, constructing a wired connection between the master collection control module and multiple sensor modules; wherein,

The master collection control module includes a secondary master clock, and each of the sensor modules includes a slave clock; at least one synchronization signal channel and one slave clock signal channel for information interaction between the slave clock and the secondary master clock are disposed between the master collection control module and each sensor module;

Selecting an alignment mode, wherein the master collection control module determines and selects a synchronization mode based on received data packet information transmitted by the sensor modules;

Performing data alignment processing, wherein the master collection control module performs data alignment processing on the collection data packets transmitted by the sensor modules through a corresponding alignment mode based on a determination result;

Receiving and storing the aligned collection data packets, wherein the central processing system receives and stores the aligned collection data packets transmitted by the master collection control module.

In a fourth aspect, the present disclosure further provides a multi-device multi-physiological-parameter synchronization device, including:

A central processing system, a synchronization source sub-system, and at least two collection sub-systems; wherein,

The collection sub-systems include: a master collection control module and multiple sensor modules;

The central processing system sends at least one synchronization instruction to the synchronization source sub-system;

The synchronization source sub-system respectively generates a third synchronization information packet and a first synchronization information packet based on the synchronization instruction, and sends the first synchronization information packet to a synchronization clock unit of the collection sub-systems, and the synchronization clock unit sends the first synchronization information packet in a synchronization initiation period;

The sensor modules of the collection sub-systems obtain and check the first synchronization information packet and generate a second synchronization information packet based on a check result;

The central processing system obtains the third synchronization information packet and the second synchronization information packet and performs information matching to align collection data packets of the collection sub-systems.

In a fifth aspect, the present disclosure further provides a multi-device multi-physiological-parameter synchronization method, including:

By using the above multi-device multi-physiological-parameter synchronization device, constructing a closed-loop wireless transmission system, namely, a one-to-one relationship is formed between the central processing system and the synchronization source sub-system, a one-to-many relationship is formed between the synchronization source sub-system and multiple collection sub-systems, and a many-to-one relationship is formed between the multiple collection sub-systems and the central processing system;

Initiating a synchronization instruction, wherein the central processing system initiates a synchronization instruction to the synchronization source sub-system, and after receiving the synchronization instruction, the synchronization source sub-system, at the same time, sends a third synchronization information packet to the central processing system and sends a first synchronization information packet to the multiple collection sub-systems;

Checking information, wherein the multiple collection sub-systems receive the first synchronization information packet and then check information, generate a second synchronization information packet after validating a check result, and transmit the second synchronization information packet to the central processing system;

Matching information, wherein the central processing system performs information matching on the third synchronization information packet and the second synchronization information packet;

Adjusting a synchronization initiation period, wherein the initiation period for the synchronization instruction is adjusted dynamically based on a matching result.

In a sixth aspect, the present disclosure further provides an offline collection device, including:

The above multi-device multi-physiological-parameter synchronization device; wherein,

The synchronization source sub-system further includes a second data storing module;

The collection sub-systems further include a third data storing module;

The central processing system sends only one synchronization instruction to the synchronization source sub-system at the time of initial setting, and stores the one synchronization instruction in the second data storing module to set the one synchronization instruction as a synchronization instruction for the synchronization source sub-system;

The third data storing module is configured to store collection data packets and a second synchronization information packet.

In a seventh aspect, the present disclosure further provides an offline data collection method based on the above offline collection device, including:

Setting a synchronization instruction, namely, setting the synchronization instruction of the synchronization source sub-system by the central processing system at the time of initial setting;

Constructing a synchronous transmission system, namely, forming a one-to-many relationship between the synchronization source sub-system and multiple collection sub-systems;

Initiating a synchronization action, wherein the synchronization source sub-system initiates a synchronization action to form a third synchronization information packet and a first synchronization information packet, the synchronization source sub-system locally stores the third synchronization information packet, and sends the first synchronization information packet to synchronization clock units of the multiple collection sub-systems, and the synchronization clock units then send the first synchronization information packet in a synchronization initiation period;

Checking information, wherein the sensor modules of the multiple collection sub-systems receive the first synchronization information packet and then check information, generate a second synchronization information packet after validating a check result, and the multiple collection sub-systems locally store the second synchronization information packet.

The present disclosure has the following beneficial effects: in the present disclosure, the master collection control module sends synchronization information to multiple sensor modules at the same time and the master collection control module, based on multiple pieces of timestamp information, maps the collection data packets sent from the multiple sensor modules by time mapping to its own secondary master clock, without requiring multiple sensor modules to be series-connected through a same clock source. In this case, the sensor models are not limited and real-time adjustment can be made to the sampling rate, ensuring high synchronization efficiency between multiple sensor modules.

**DESCRIPTION OF THE DRAWINGS**

The present disclosure will be further detailed below by way of the following drawings and embodiments.

FIG. 1 is a flowchart illustrating a collection method according to an embodiment 1 of the present disclosure.

FIG. 2 is a synchronization flowchart illustrating single data synchronization according to an embodiment 1 of the present disclosure.

FIG. 3 is a diagram illustrating a signal sequence according to an embodiment 1 of the present disclosure.

FIG. 4 is a diagram illustrating a system framework according to an embodiment 2 of the present disclosure.

FIG. 5 is a structural schematic diagram illustrating a master collection control module and a sensor module according to an embodiment 2 of the present disclosure.

FIG. 6 is a flowchart illustrating a data alignment method according to an embodiment 3 of the present disclosure.

FIG. 7 is a flowchart of aligning collection data packets by difference mapping mode according to an embodiment 3 of the present disclosure.

FIG. 8 is a flowchart of aligning collection data packets by scaling mapping mode according to an embodiment 3 of the present disclosure.

FIG. 9 is a signal sequence diagram of aligning collection data packets by scaling mapping mode according to an embodiment 3 of the present disclosure.

FIG. 10 is a time mapping diagram of slave clock sampling points of aligning collection data packets by scaling mapping mode according to an embodiment 3 of the present disclosure.

FIG. 11 is a structural schematic diagram of an embodiment 4 of the present disclosure.

FIG. 12 is a schematic diagram of an internal structure of an embodiment 4 of the present disclosure.

FIG. 13 is a schematic diagram illustrating a system framework according to an embodiment 4 of the present disclosure.

FIG. 14 is a connection topology diagram of a primary master clock and a slave clock.

FIG. 15 is a flowchart of an embodiment 5 of the present disclosure.

FIG. 16 is a signal sequence diagram in a time alignment process in an embodiment 5 of the present disclosure.

FIG. 17 is a flowchart of an embodiment 7 of the present disclosure.

FIG. 18 is a signal sequence diagram in a time alignment process in an embodiment 7 of the present disclosure.

In the drawings:

central processing system; 11. data processing module; 12. first communication module; 13. first data storing module;

synchronization source sub-system; 21. second communication module; 22. primary master clock; 23. first wireless transceiving module; 24. second data storing module;

collection sub-system; 31. master collection control module; 311. synchronization clock unit; 312. first clock source unit; 313. first data processing unit; 314. first data transmitting unit; 32. sensor module; 321. on-board sensor; 3211. second clock source unit; 3212. second data transmitting unit; 3213. second data processing unit; 322. external probe; 3221. third clock source unit; 3222. third data transmitting unit; 3223. third data processing unit; 33. slave clock; 34. second wireless transceiving module; 35. third data storing module; 36. third communication module; 37. data transmitting module.

**SPECIFIC IMPLEMENTATIONS**

The present disclosure will be further described in detail below with reference to the accompanying drawings. These drawings are simplified schematic diagrams, which only illustrate the basic structures of the present disclosure in a schematic manner, and therefore only show the structures related to the present disclosure.

In the description of the present disclosure, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the drawings, which are merely for convenience of describing the present disclosure and simplifying the description, rather than indicating or implying that the referred device or element must have a particular orientation, be constructed in a particular orientation, and operate in a particular orientation, and therefore shall not be construed as limiting the present disclosure. Further, the features defined with "first" and "second" may expressly or implicitly include one or more such features. In the description of the present disclosure, unless otherwise specified, "multiple" means two or more.

In the description of the present disclosure, it should be noted that, unless otherwise expressly specified and defined, the terms "mounted", "connected", and "coupled" should be understood in a broad sense, for example, may be fixed connection, detachable connection, or integral connection; may be mechanical connection or electrical connection; may be direct connection, indirect connection through an intermediate medium, or internal communication between two elements. Those of ordinary skill in the art can understand the specific meanings of the foregoing terms in the present disclosure according to specific situations.

Some embodiments of the present disclosure will be described in detail below with reference to the accompanying drawings. In the absence of conflict, the following embodiments and features in the embodiments may be combined with one another.

It should be noted that: similar reference numerals and letters denote similar items in the following drawings. Therefore, once an item is defined in one drawing, it does not need to be further defined and explained in the subsequent drawings.

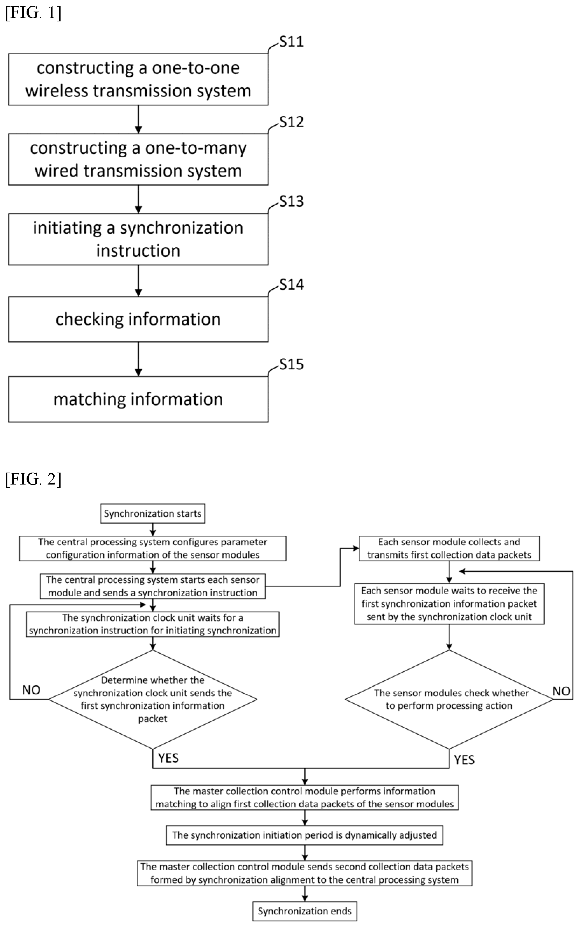

As shown in FIG. 1, at least one embodiment provides a single-device multi-physiological-parameter synchronization and fusion method, which includes the following steps:

At step S11, a one-to-one wireless transmission system is constructed, namely, a one-to-one relationship is formed between a central processing system 1 and a master collection control module 31;
At step S12, a one-to-many wired transmission system is constructed, namely, a wired connection is constructed between the master collection control module 31 and multiple sensor modules 32.
At step S13, a synchronization instruction is initiated. The central processing system 1 initiates a synchronization instruction to the master collection control module 31, and the master collection control module 31 receives the synchronization instruction and then sends a first synchronization information packet to the multiple sensor modules 32 and records a timestamp $T_{S0}$ corresponding to the first synchronization information packet.

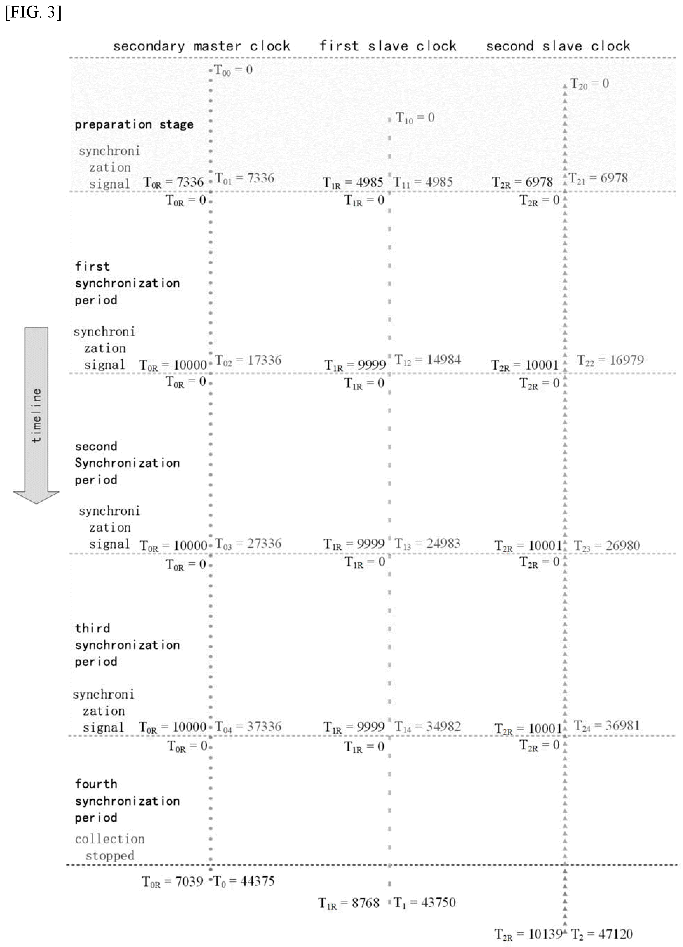

The first two steps ensure matching between a connection interface of the central processing system 1, the master collection control module 31 and the sensor modules 32 and a transmission protocol. Before sending a synchronization instruction to the master collection control module 31, the central processing system 1 performs identity binding on the central processing system 1, the master collection control module 31 and the sensor modules 32, that is, the central processing system 1 performs data and command transmission with the master collection control module 31 based on second communication protocol, and the multiple sensor modules 32 perform data and command transmission with the master collection control module 31 based on third communication protocol. As shown in FIG. 3, when a single synchronization is started, before the central processing system 1 sends a synchronization instruction to the master collection control module 31, the central processing system 1 sends a control instruction to the master collection control module 31. The control instruction includes parameter configuration information of each sensor module 32, and the parameter configuration information includes a sampling rate, a packet transmission rate (the number of sampling points for triggering one packet transmission) and a sensor inputting range. A first data processing module of the master collection control module receives the parameter configuration information and then, with a greatest common divisor of parameter sampling periods of the sensor modules 32 as a minimum time interval, resets a frequency division coefficient of collection tasks of each sensor module 32 under its own clock source.

While starting each sensor module 32 to perform data collection, the central processing system 1 is further configured to send a synchronization instruction to the master collection control module 31, and the master collection control module 31 controls a synchronization clock unit 311 thereon to send a first synchronization information packet in a synchronization initiation period. If the synchronization initiation period is reached, the synchronization clock unit 311 sends the first synchronization information packet; if within one synchronization initiation period, the synchronization clock unit 311 does not send the first synchronization information packet.

At step S14, information checking is performed. The multiple sensor modules 32 receive the first synchronization information packet and then check information, generate a second synchronization information packet after validating a check result, and transmit the second synchronization information packet to the master collection control module.

Furthermore, in the step S14, the multiple sensor modules 32 receive the first synchronization information packet and then check information, which includes the following: the multiple sensor modules 32 checks a timestamp $T_{SX}$ at the time of receiving the first synchronization information packet in respective synchronization initiation periods $t_{cn}$; if the timestamp $T_{SX}$ is consistent with the corresponding synchronization initiation period $t_{cn}$, the first synchronization information packet together with the timestamp $T_{SX}$ is generated into the second synchronization information packet; if the timestamp $T_{SX}$ is inconsistent with the corresponding synchronization initiation period $t_{cn}$, the sensor modules 32 do not process the received first synchronization information packet. Namely, the sensor modules 32 check whether to perform processing action.

The second synchronization information packet includes the timestamp $T_{SX}$ at the time of receiving the first synchronization information packet by the sensor modules 32; first collection data packets include physiological data collected by the sensor modules 32 and a timestamp $T_X$ at the time of collection.

When the central processing system 1 starts each sensor module to perform data collection, the first collection data packets are generated. The first data processing module of the master collection control module 31 starts time accumulation based on its clock source. If the sensor modules 32 are on a collection main board, i.e. are on-board sensors 321, when the clock source of the master collection control module 31 accumulates to a sampling period of a sensor module 32, the first data processing module on the master collection control module 31 triggers a single data collection of the corresponding sensor module 32; if the sensor modules 32 are an external probe 322, when the clock source on the external probe 322 accumulates to a sampling period of a sensor module 32, the data processing module of the external probe 322 triggers one data collection of the corresponding sensor module 32. This step aims to ensure the collection data of the sensor modules 32 read on the master collection control module 31 is the latest data of the sensor modules 32 at this time.

After a sampling point number accumulated by a sensor module 32 on the master collection control module 31 reaches a set value (packetization point number) (by the above method, the sampling point numbers of all sensor modules 32 at this time all already accumulate to corresponding packetization point numbers), the first data processing module of the master collection control module 31 adds the timestamp information $T_0$ to the packetization data, and sends the data to the central processing system 1 based on the second communication protocol. After the sampling point number accumulated by an external probe 322 reaches a set value (packetization point number), the external probe 322 adds the timestamp information $T_X$ to the packetization data, and sends the data to the master collection control module 31 based on the first communication protocol. The master collection control module 31 processes the collection data packets and then forwards them to the central processing system 1.

At step S15, information matching is performed. The master collection control module 31 performs information matching on the second synchronization information packet and a timestamp $T_{S0}$ corresponding to the first synchronization information packet in a synchronization initiation period to align first collection data packets of the sensor modules 32.

Specifically, the master collection control module 31 recalculates time information $T_Z$ in the collection data packets by a mapping formula based on the time information $T_X$ in the first collection data packets, the timestamp $T_{S0}$ for the master collection control module 31 to initiate synchronization, and the timestamp $T_{SX}$ in the second synchronization information packet, so as to align the first collection data packets of the sensor modules 32. Furthermore, the mapping formula is as below: $T_Z = T_{S0} + (T_X - T_{SX})$, S=1, 2, 3, 4..., where S represents a number of synchronizations, which accumulates along with the sending of the synchronization information pack-

et.

After the single-device multi-physiological-parameter collection system of the present disclosure is started for collection, the master collection control module 31 transmits one synchronization signal over a synchronization cable at a time interval (synchronization initiation period). When sending the synchronization signal, the first data processing unit 313 of the master collection control module 31 records a timestamp $T_{S0}$ at this time; the data processing unit of each sensor module 32, when receiving this synchronization signal, forms the timestamp information $T_{SX}$ of the sensor module 32 at this time into a synchronization information packet and sends it to the master collection control module 31 based on the first communication protocol.

A first transmission processing unit 14 of the master collection control module 31 sends the collection data packets of the corresponding on-board sensors 321 to the central processing system 1 based on the second transmission protocol; after receiving the synchronization information packets from the external probes 322, the master collection control module 31 obtains the timestamp information $T_{SX}$ in the synchronization information packets of the external probes 322. Subsequently, the master collection control module 31 receives the collection data packets from the external probes 322 and then reads the timestamp $T_X$ in the packets and calculates an offset time ($T_X - T_{SX}$) between it and the previous synchronization information packet, and finally, recalculates the timestamp ($T_{S0} + T_X - T_{SX}$) of the collection data packets in the master collection control module 31 based on the timestamp $T_{S0}$ of sending the synchronization information packet last time by the master collection control module 31 and the offset time, and sends it to the central processing system 1 based on the second communication protocol.

The master collection control module 31 sends second collection data packets formed by synchronization alignment to the central processing system 1. The central processing system 1, based on actual requirements, performs data processing on the received collection data information and stores it at a corresponding position. This one synchronization flow is ended. The first communication protocol is a connection-less communication protocol. In this embodiment, the protocol includes but not limited to a wired connection-based private protocol. The second communication protocol is a connection-oriented communication protocol. In this embodiment, the protocol includes but not limited to one or more of TCP/IP protocol, Bluetooth, and Bluetooth BLE protocol. The third communication protocol is any form of level signal (e.g. inversion or pulse or the like).

The master collection control module 31 (the first clock source unit of the master collection control module 31 is a secondary master clock) sends a time alignment synchronization signal to all sensor modules (with the second clock source unit or third clock source unit of each sensor as slave clock) at the same time, and sends one synchronization information packet to the central processing system 1. When each slave clock receives the synchronization information packet, the slave clock itself determines whether to perform synchronization processing. In case of synchronization processing, a timestamp at this time is added and sent to the master collection control module 31. When the master collection control module 31 receives the synchronization information packets and the collection data packets of corresponding sensor modules 32, one time alignment is completed.

In the existing single-device collection method, it is too ideal to use a same kind of clock sources for multiple sensors. On the one hand, most of the existing sensors are digital sensors and its clock sources are integrated inside and thus it is difficult to connect this unified clock source. Even if this unified clock source is connected, the clock frequency divider is implemented in the form of hardware. The collection system itself cannot adjust the sampling rate of each sensor flexibly in a use process, bringing inconvenience to users. On the other hand, in the existing collection system, since the clock sources and clock frequency dividers are fixed by hardware design, when the sensor model is changed, it is required to redesign the whole system, leading to poor extensibility. The present disclosure provides a single-device multi-physiological-parameter synchronization and fusion method to improve the way of using a same hardware clock source and clock frequency divider, which not only ensures the data synchronism of the multiple sensor modules but also avoids the inconvenience of using a same clock source.

In this embodiment, the master collection control module 31 sends synchronization information to multiple sensor modules 32, and the multiple sensor modules 32 perform mapping with the time information of the master collection control module 31. In this case, the sensor model is not limited and the sampling rate can be adjusted, bringing use convenience and good extensibility.

In some embodiments, the master collection control module 31 initiates one synchronization signal within one synchronization initiation period corresponding to each sensor, and the setting method of the synchronization initiation period $t_{cn}$ includes the following: An initial synchronization period is set, that is, before the sensor modules 32 start collection, setting is made based on crystal oscillators of the master collection control module 31 and the sensor modules 32.

Specifically, taking the crystal oscillator of $\pm X$ ppm (deviation X seconds per million seconds) used by the master collection control module 31 as example, the clock deviation between the master collection control modules 31 is not greater than 2Xppm, that is, each time the master collection control module 31 works for an interval of not less than 500000/X ms, the clock may generate a deviation of 1 ms. At this moment, it is only required to ensure the synchronization period is less than 50000/X ms and control the synchronization accuracy of the master collection control module 31 within 1 ms. Especially, when X=10, it is only required to complete one synchronization within 50 seconds so as to realize the synchronization accuracy of less than 1ms. On the contrary, if it is required to complete one synchronization within Y seconds, it is required to ensure the clock of the master collection control module 31 has a deviation of less than 1ms within Y seconds. The crystal oscillator deviation of the master collection control module 31 shall not be greater than 1/1000Y, i.e. shall be less than 1000/Y ppm, and thus the synchronization accuracy of at least 1ms can be guaranteed. Therefore, using the crystal oscillators with high accuracy can, during each synchronization, reduce the operation frequency in which the central processing system 1 performs sampling point addition or removal on the data of the master collection control module 31.

A dynamic synchronization initiation period is set, namely, after the sensor modules 32 start collection, when the central processing system detects frequent occurrence of addition or removal of data of sampling points, the central processor sends a dynamic adjustment instruction to the master collection control module 31.

Specifically, when the environmental impact is large (e.g. temperature or humidity or the like), the stability of the crystal oscillator may be affected, resulting in fluctuations and unable to achieve the desired effect. At this time, the impact of the fluctuations of the crystal oscillator may directly affect the data collection of the sensors, leading to less or more sampling points of the sensors in the synchronization period. Therefore, when the master collection control module 31 processes the sensor data of the external probes 322, if the behavior of addition or removal of sampling points occurs frequently, it can be considered that, within the synchronization period, the point number of the sensor data of the external probes 322 fails to reach the design expectation (more or less compared with the expected value), and the central processing system detects the frequent occurrence of addition or removal of data of sampling points. The central processor sends a dynamic adjustment instruction to the master collection control module 31 to shorten the synchronization period of the master collection control module 31, thereby improving the sending frequency of the synchronization signal.

As a result, based on the above principle, by increasing the accuracy of the crystal oscillator in the clock source unit and shortening the synchronization period, a higher synchronization accuracy (<1ms) can be achieved.

The strategy of one master collection control module 31 connected with two external probes 322, the sampling rate of 1000Hz T1=1ms, single sampling point packetization, and the synchronization clock unit 311 (i.e. secondary master clock) running to make one generation at an interval of 10s is taken as example for illustration, and similar operation can be made for the master collection control module 31 connected with more than two external probes in sampling rate, packetization mechanism, and data processing and alignment method under the synchronization period.

After the pre-start parameter setting is completed, the central processing system 1 starts the master collection control module 31 and two external probes 322 to start collection. Due to delay of transmission of the control command, the two external probes 322 do not start accumulating respective timestamps at a same time.

The master collection control module 31 receives the collection data packets from the external probes 322 and the synchronization data packets at each synchronization trigger. The whole process is as shown in FIGS. 2 and 3. In the preparation stage, due to communication delay, the clocks (i.e. slave clocks) of the external probes 322 are not started at the same time. Since the first synchronization is not completed this time, the data packets of the external probes 322 in the preparation stage are all in un-synchronized state. Therefore, the master collection control module 31 discards the first collection data packet. The third clock source unit 3221 of each external probe 322 is different, and the clock of each external probe 322 is surely fast or slow. In order to enable the system to have synchronism, it is required to ensure each external probe 322 maintains consistent sampling point number within each synchronization period.

At the first synchronization time, the timestamps of the synchronization data packets uploaded by the master collection control module 31 and the two external probes 322 have accumulated to $T_{00}$, $T_{01}$ and $T_{02}$, and the second clock units 221 of the two external probes 322 respectively correspond to a first slave clock and a second slave clock. The specific process is as shown in FIG. 3. At this time, the first data processing unit 313 of the master collection control module 31 needs to record the above three values and respectively calculate the actual collection timestamps of the two external probes 322.

$$T'_{x1} = T_0 + T_{x1} - T_{01}$$

$$T'_{x2} = T_0 + T_{x2} - T_{02}$$

Until the next synchronization time, the master collection control module 31 needs to replace the data packets uploaded by the external probes 322 and then send them to the central processing system 1.

When the second synchronization time arrives after the secondary master clock runs for 10s, the timestamps of the synchronization data packets uploaded by the master collection control module 31 and the two external probes 322 have accumulated to $T_{10}$, $T_{11}$ and $T_{12}$. The first data processing unit 313 of the master collection control module 31 needs to record the three values and respectively calculate the actual collection timestamps of the two external probes 322:

$$T'_{x1} = T_1 + T_{x1} - T_{11}$$

$$T'_{x2} = T_1 + T_{x2} - T_{12}$$

At each of the following synchronization times and within each of the following synchronization periods, the central processing system 1 processes the master collection control module 31 by the above processing method until the collection process is stopped. The actual collection timestamps of the two external probes 322 can be calculated in the formulas below:

$$T'_{x1} = T_s + T_{x1} - T_{s1}$$

$$T'_{x2} = T_s + T_{x2} - T_{s2}$$

Since the synchronization signal interval generated by the secondary master clock is followed strictly based on the setting, the relative timestamp of the secondary master clock during each synchronization can accumulate to $T_{0R}$ = 10000. Due to difference between the clock source of the slave clocks of the external probes 322 and that of the secondary master clock, the clock is a little slower than the secondary master clock when the relative timestamp accumulates to $T_{1R}$ = 9999, and faster than the secondary master clock when the relative timestamp accumulates to $T_{2R}$ = 10001. At this time, based on the above formulas, in an interval between two synchronizations, the sampling point number of one external probe 322 is 9999 and the sampling point number of the other external probe 322 is 10001. At this time, in order to ensure the number of the sensor collection points uploaded by each external probe 322 in a synchronization interval is 10000, it is needed to add the data of 10000-9999 points to one external probe 322, and remove the data of 10001-10000 points from the other external probe 322. In this way, it can be guaranteed that during the timestamp replacement, there is no cumulative deviation of timestamp or timestamp jitter.

The above clock characteristics of the master collection control module 31 are for the purpose of examples, and the actual deviation is related to the performance of the selected crystal oscillator. If the accuracy of the crystal oscillator is fixed and more sampling points are to be added or removed within each synchronization initiation period, the influence of the cumulative error of the clock on the signal quality can be reduced by decreasing or increasing the synchronization initiation period.

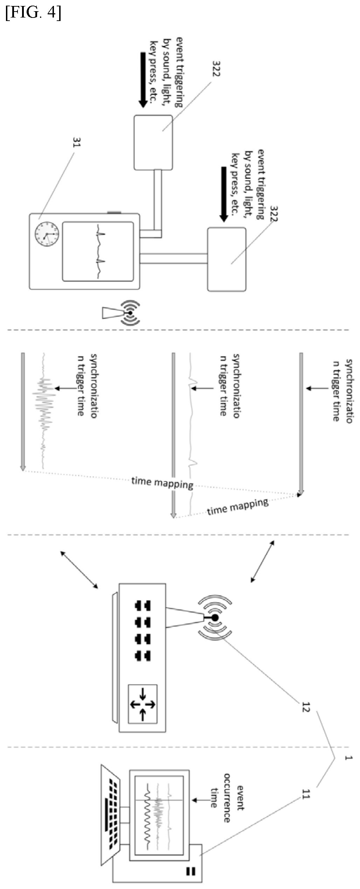

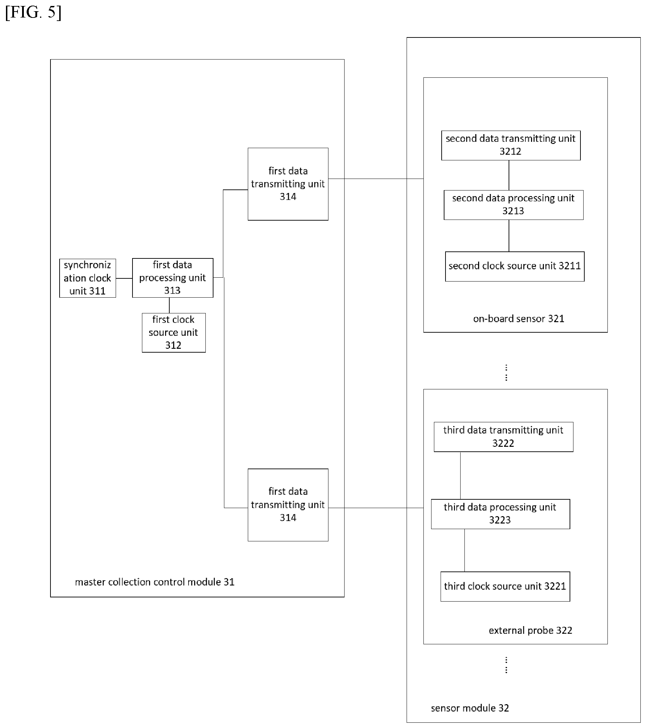

Based on the same inventive idea as the single-device multi-physiological-parameter synchronization and fusion method in the above embodiments, as shown in FIGS. 2 to 5, at least one embodiment provides a collection system for the single-device multi-physiological-parameter synchronization and fusion method, which includes multiple sensor modules 32 configured for collection and transmission of multiple physiological parameters; a master collection control module 31 with a synchronization clock unit 311, connected in a wired way with the multiple sensor modules 32 to perform data synchronization alignment and fusion processing on the multiple sensor modules 32, where the synchronization clock unit 311 sends a first synchronization data packet to the multiple sensor modules 32, and the master collection control module 31 performs synchronization alignment and fusion processing on first collection data packets collected by the multiple sensor modules 32 to obtain second collection data packets; a central processing system 1, configured to set parameters of the multiple sensor modules 32 and the master collection control module 31, send a control instruction to the master collection control module 31, and receive the second collection data packets.

In some embodiments, the first collection data packets include data information collected by the sensor modules 32 and a timestamp $T_X$ at the time of data collection; the second collection data packets include collection information and a timestamp $T_Z$ after synchronization/fusion processing.

In some embodiments, the master collection control module 31 records the timestamp $T_{S0}$ of sending the synchronization signal, receives the synchronization signal packets from the multiple sensors, and based on the timestamp $T_{S0}$ and the synchronization signal packets, performs synchronization and fusion processing on the first collection data packets collected by the multiple sensor modules 32 to obtain the second collection data packets.

In some embodiments, the central processing system 1 includes a data processing module 11 and a first communication module 12. The data processing module 11 is connected with the first communication module 12. The data processing module 11 is configured to perform data alignment processing on the second collection data packets, and the first communication module 12 is connected in a wireless way with the master collection control module 31 based on the second communication protocol to second a control instruction and transmit the second collection data packets. The second communication protocol is a connection-oriented communication protocol, which includes but not limited to TCP/IP protocol, Bluetooth, or Bluetooth BLE protocol. The data processing module 11 uses a personal computer (PC) or the like, and the first communication module 12 uses a switch or the like.

In some embodiments, between the master collection control module 31 and the sensor modules 32, data transmission is performed based on the first communication protocol, and synchronization signal transmission is performed based on the third communication protocol. The first communication protocol is a wired connection-based private protocol and the third communication protocol is a level signal (the level signal is inversion signal or pulse signal).

In some embodiments, the master collection control module 31 further includes: a first clock source unit 312 configured to generate a corresponding timestamp; a first data processing unit 313, configured to, based on the time information $T_X$ in the first collection data packets, the timestamp $T_{S0}$ for the master collection control module 31 to initiate synchronization and the timestamp $T_{SX}$ in the second information packet, perform alignment processing on the first collection data packets to form the second collection data packets; multiple first data transmitting units 314, configured to transmit and receive the synchronization signal packets and collection data packets.

In some embodiments, the sensor modules 32 include: at least one on-board sensor 321, disposed on the master collection control module 31; multiple external probes 322; where the on-board sensors 321 and the external probes 322 are all connected to the first data transmitting units 314 in a wired way; a synchronization channel for transmitting the first synchronization information packet and/or the second synchronization information packet is disposed between the on-board sensors 321 and the master collection control module 31 and between the external probes 322 and the master collection control module 31. The multiple synchronization channels are mutually communicated to ensure the multiple sensor modules can receive the synchronization information packets at the same time.

Furthermore, the on-board sensors 321 include: a second clock source unit 3211, configured to generate a corresponding timestamp; a second data transmitting unit 3212, connected with the first data transmitting units 314; a second data processing unit 3213, connected with the second clock source unit 3211 and the second data transmitting unit 3212 to control the second clock source unit 3211 to generate a corresponding timestamp and the second data transmitting unit 3212 to perform data reception and transmission. The external probes 322 include: a third clock source unit 3221, configured to generate a corresponding timestamp; a third data transmitting unit 3222, connected with the first data transmitting units 314; a third data processing unit 3223, connected with the third clock source unit 3221 and the third data transmitting unit 3222 to control the third clock source unit 3221 to generate a corresponding timestamp and the third data transmitting unit 3222 to perform data reception and transmission.

The on-board sensors 321 and the external probes 322 are all configured to collect a sensing signal, and the sensing signal is at least one of an external source noise signal, an EEG signal, an EMG signal, or an ECG signal. Preferably, in some embodiments, the on-board sensors 321 include an external source noise signal collection sensor; the external probes 322 include at least one of an EEG collection sensor, an EMG collection sensor, and an ECG collection sensor.

In some embodiments, the master collection control module 31 further includes a first communication unit, which is in signal connection with the first communication module 12 based on the second communication protocol to establish network connection and data interaction.

In conclusion, in the single-device multi-physiological-parameter collection system and a collection method thereof in the embodiments, the use of the master collection control module 31 with the synchronization clock unit 311 avoids the dependence of the sensors on the external clock sources, so that the sensor model is not limited and the sampling rate can be adjusted, bringing use convenience and good extensibility. The synchronization of multiple physiological parameters can be realized and the accurate synchronization and fusion of multiple parameter data in a long time can be accomplished. The high-accuracy data synchronization between the multiple sensor modules and the master collection control module 31 helps the data analysis of the central processing system 1. The master collection control module 31 only needs to record the timestamp of each sensor module 32 during synchronization, bringing less computation load in data fusion and saving the computing power. Furthermore, the multiple physiological parameters are aligned data in temporal domain, and when an external stimulation is generated, the collected tested multi-parameter physiological signals are valid data, having research value.

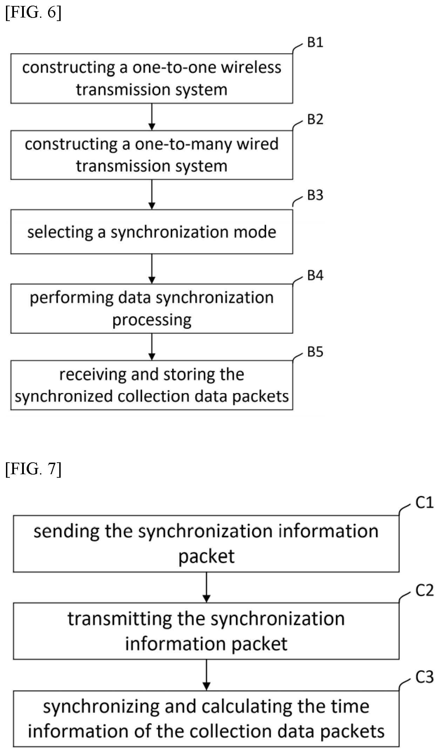

There is provided a data alignment method of collection data packets based on the same inventive idea as the single-device multi-physiological-parameter collection system in the above embodiments. As shown in FIG. 6, the data alignment method includes the collection system in the above embodiments. The data alignment method includes the following steps.

At step B1, a one-to-one wireless transmission system is constructed, namely, a one-to-one relationship is formed between a central processing system 1 and a master collection control module 31.

At step B2, a one-to-many wired transmission system is constructed, namely, a wired connection is constructed between the master collection control module 31 and multiple sensor modules 32.

The master collection control module 31 includes a secondary master clock, and each sensor module 32 includes a slave clock; at least one synchronization signal channel and one slave clock signal channel for information interaction between the slave clock and the secondary master clock are disposed between the master collection control module 31 and each sensor module 32.

At step B3, a synchronization mode is selected. The master collection control module 31 determines and selects a synchronization mode based on data packet information received from the sensor modules 32.

At step B4, data synchronization processing is performed. The master collection control module 31 performs data synchronization processing on the collection data packets transmitted by the sensor modules 32, through a corresponding synchronization mode based on a determination result.

At step B5, the synchronized collection data packets are received and stored. The central processing 1 receives and stores the collection data packets from the master collection control module 31.

In this embodiment, the collection data packets transmitted by the sensor modules 32 include a sampling point number, collection data and a corresponding slave clock timestamp $T_X$ at the time of data collection, and the master collection control module 31 determines and selects a synchronization mode based on the sampling point number in the data packets, which includes the following steps:

At step B41, a determination threshold of the sensor modules 32 is set. Based on historical data, the determination threshold of the collection point number when the collection data packets of the sensor modules 32 lose a time correlation is set.

At step B42, the collection point number is checked. The master collection control module 31 checks the information of the collection point number in the collection data packets received in real time and the determination threshold.

If the sampling point number is within a set determination threshold range, the master collection control module 31 synchronizes the collection data packets based on a difference mapping mode; if the collection point number exceeds the determination threshold, the master collection control module 31 synchronizes the collection data packets based on a scaling mapping mode.

When the collection point number of the sensor modules 32 is relatively stable in one synchronization period and basically free from external influence, synchronization alignment is performed on the collection data packets by the difference mapping mode. Due to small computation load, the collection data packets can be adjusted by simple point removal or addition. When the collection point number of the sensor modules 32 within one synchronization period is unstable, the master collection control module 31 needs to add or remove more collection data packets, affecting the data truth and leading to later inaccurate data processing of the collection data packets by the central processing system 1. In this embodiment, when the collection point number of the sensor modules 32 is under external or other influences, which leads to more removed or added points, the collection data packets are synchronized by the scaling mapping mode to perform stretching or shrinking mapping on the collection data packets in a fixed time length, leading to a larger computation load compared with the synchronization alignment performed on the collection data packets by the difference mapping mode. But it is not required to perform the operation of point addition or removal, ensuring the data accuracy.

The two synchronization alignment modes of the collection data packets are detailed below:

Difference mapping mode

As shown in FIG. 7, aligning the collection data packets based on the difference mapping mode includes the following steps:

At step C1, the synchronization information packet is sent. The master collection control module 31 sends a first synchronization information packet to each sensor module 32 over a corresponding synchronization signal channel based on a corresponding synchronization initiation period, and records a synchronization initiation time $T_{S0}$.

At step C2, the synchronization information packet is transmitted. The sensor modules 32 collect data and record time information $T_{SX}$ of receiving the first synchronization information packet, and generate a second synchronization information packet by repackaging and send the second synchronization information packet to the master collection control module 31.

At step C3, the time information of the collection data packets is synchronized and calculated. The master collection control module 31 receives and reads the collection time information $T_X$ in the collection data packets transmitted by the sensor modules 32, and calculates a secondary master clock time $T'_x = T_X - T_{SX} + T_{S0}$ corresponding to the collection data packets based on a mapping formula.

As shown in FIGS. 3 and 7, at the first synchronization time, the timestamp of the synchronization data packets uploaded by the master collection control module 31 and each collection sensor module 32 already accumulates to $T_{00}$, $T_{01}$ and $T_{02}$. At this time, the first data processing unit 313 of the master collection control module 31 needs to record the above three timestamp values, and perform replacement to the later-received collection data packets (the timestamps are $T_{x1}$ and $T_{x2}$) uploaded by the sensor modules 32 based on the following formula:

$$T'_{x1} = T_0 + T_{x1} - T_{01}$$

$$T'_{x2} = T_0 + T_{x2} - T_{02}$$

Until the next synchronization time, the master collection control module 31 needs to replace the collection data packets uploaded by the sensor modules 32 and then send them to the central processing system 1.

When the second synchronization time arrives (e.g. after the clock of the secondary master clock runs for 10s), the timestamp of the synchronization data packets uploaded by the master collection control module 31 and each sensor modules 32 accumulates to $T_{10}$, $T_{11}$ and $T_{12}$. The first data processing unit 313 of the master collection control module 31 needs to record the above three timestamp values and perform replacement to the later-received collection data packets (the timestamps are $T_{x1}$ and $T_{x2}$) uploaded by the sensor modules 32 based on the following formula:

$$T'_{x1} = T_1 + T_{x1} - T_{11}$$

$$T'_{x2} = T_1 + T_{x2} - T_{12}$$

At each of the following synchronization times and within each of the following synchronization periods, the central processing system 1 processes the master collection control module 31 and the sensor modules 32 by the above processing method until the collection process is stopped. The timestamp replacement is carried out based on the following formula:

$$T'_{x1} = T_s + T_{x1} - T_{s11}$$

$$T'_{x2} = T_s + T_{x2} - T_{s12}$$

Since the synchronization signal interval generated by the secondary master clock is followed strictly based on the setting, the relative timestamp of the secondary master clock during each synchronization can accumulate to $T_{0R}$ = 10000. Due to difference between the clock source of the slave clocks of the sensor modules 32 and that of the secondary master clock, the relative timestamp respectively accumulates to $T_{1R}$ = 9999 (the clock is a little slower than the secondary master clock) and $T_{2R}$ = 10001 (the clock is a little faster than the secondary master clock). At this time, based on the above formulas, in an interval between two synchronizations, it is sure that the master collection control module 31 only reads to 9999 sampling points for one sensor module 32 and reads to 10001 sampling points for the other sensor module 32. In order to ensure the number of the sensor collection points uploaded by each sensor module 322 in a synchronization interval is 10000, it is needed to add the data of (10000-9999) points to the first sensor module 32, and remove the data of (10001-10000) points from the second sensor module 32. In this way, it can be guaranteed that during the timestamp replacement, there is no cumulative deviation of timestamp or timestamp jitter.

When the sampling point number to be added (or removed) by the master collection control module 31 exceeds a given number, i.e. the determination threshold corresponding to the sensor modules 32 (e.g. greater than or equal to 2 sampling points), it means that too many sampling points are to be added (or removed) and the data before and after sampling point addition (or removal) has severely lost its temporal continuity. In order to solve the above problem, the master collection control module 31 in this embodiment uses the scaling mapping mode to synchronize the collection data packets. The above clock characteristics of the master collection control module 31 are for the purpose of examples, and the actual deviation is related to the performance of the selected crystal oscillator. Herein, it is further noted that, when there are many points to be added or removed, if the accuracy of the crystal oscillator is fixed, it is required to add or remove more sampling points for each synchronization initiation period. In order to ensure data truth, the influence of the cumulative error of the clock on the signal truth can be lowered by decreasing the synchronization initiation period.

(2) Scaling mapping mode

In this embodiment, the master collection control module aligns the collection data packets by the scaling mapping mode, which includes the following steps:

At step C1', a slave clock signal time interval $T_{xP}$ of each sensor module 32 is set, a corresponding sampling point number set value q is set based on the sampling rate $F_X$ of each sensor module 32, and based on historical data, a time period of the sampling point number set value corresponding to the sensor module 32, i.e. the slave clock signal time interval $T_{xP}$, is completed.

At step C2', a slave clock signal is sent; when the sampling point number accumulated by the sensor module 32 reaches the set value, the sensor module 32 sends one slave clock signal to the master collection control module 31 over a slave clock signal channel; the master collection control module 31 records a corresponding timestamp $T_{xsn}$ of the secondary master clock at the time of receiving the slave clock signal.

At step C3', the corresponding secondary master clock time $T_x'$ at the time of the master collection control module (31) receiving the collection data packets is calculated to replace the slave clock time $T_X$ of the collection data packets, so as to complete the synchronization of the collection data packets;

$T_x' = k_X * T_X$ , where $k_X$ is a clock drift rate of the secondary master clock and the slave clock, and $k_X$= ( the sampling rate of the sensor/the true sampling rate obtained by enabling the sampling rate of the slave clock to correspond to the secondary master clock). Specifically, the true sampling rate of the slave clock obtained by enabling the sampling rate of the slave clock to correspond to the secondary master clock is $F_x' = T_{xP}' * F_x/q$ , where $T_{xP}'$ is a secondary master clock time interval corresponding to the slave clock; the secondary master clock time interval is $T_{xP}' = T_{xsn} - T_{xs(n-1)}$ , where n=1, 2, 3, 4....

After the sampling point number accumulated by a sensor module 32 on the master collection control module 31 reaches a set value q, the sensor module 32 sends one slave clock signal over a slave clock signal cable to prompt the master collection control module 31 about the corresponding sensor module 32 completing the collection task of one set period (i.e. one slave clock signal time interval $T_{xP}$). After receiving the slave clock signal from any sensor module 32, the master collection control module 31 records time information from the previous sending of the slave clock signal. The rule for generation of the slave clock signal is that the sensor module 32 generates one slave clock signal when the sensor module 32 collects to a given point number using its own slave clock and sampling rate, aiming to allow the master collection control module 31 to calculate out the true sampling rate of the sensor module 32 mapped to the secondary master clock.

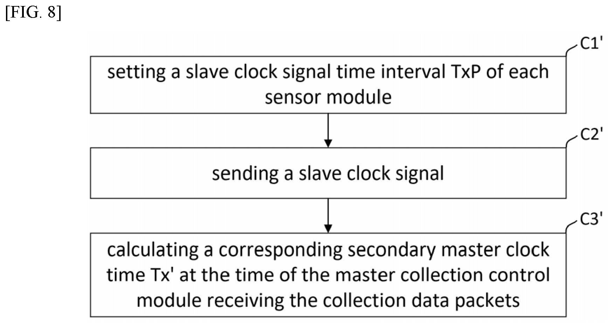

As shown in FIGS. 8 to 10, the sampling rate of the sensor module 32 is $F_X$, and after the sensor module 32 accumulates to a given number q of sampling points, for example, M times the sampling rate, (q= with M=10 as an example herein), the sensor module 32 sends one slave clock signal to the master collection control module 31 over the slave clock signal channel. In this embodiment, the slave clock signal channel is an independent slave clock signal cable. Each time the slave clock signal is sent, the timestamp of the slave clock accumulates by $T_{xP}$. The master collection control module 31 records the timestamp $T_{xsn}$ of the secondary master clock at the time of receiving the slave clock signal of each sensor module 32. After the master collection control module 31 collects two adjacent slave clock signals from a same sensor module 32, the master collection control module 31 can calculate out a corresponding time $T_{xP}'$ on the secondary master clock at the time of the salve clock running for 10s is calculated in the following formula:

$$T_{xP}' = T_{xsn} - T_{xs(n-1)}$$

Based on $T_{xP}'$ and $T_{xP}$, the master collection control module 31 calculates out the true sampling rate $F_x'$ of the slave clock on the secondary master clock in the following formula:

$$F_x' = \frac{T_{xP}'}{M}$$

Therefore, in each sampling period, the actual time of the slave clock corresponding to the secondary master clock is:

$$T'_x = \frac{1}{F'_x} = \frac{M}{T'_{xp}}$$

The clock drift rate of the secondary master clock and the slave clock is:

$$K_x = \frac{F_x}{F'_x}$$

So, when the master collection control module 31 receives the data of each sampling point of the sensor module 32, it means that this sampling period goes by $T'_x$ on the secondary master clock, and the time consumed by this sampling period on the sensor module 32 is $T_x$, and there is:

$$K_x = \frac{T'_x}{T_x}$$

The master collection control module 31 needs to perform scaling ($K_x$ is greater than 1) or stretching ($K_x$ is less than 1) on the received data of each sampling point of the sensor module 32 at the ratio of $K_x$ to map the original timestamp of each sampling point on the slave clock into the timestamp of the secondary master clock.

Particularly, when the compression or stretching is performed on the sensor data of the sensor module 32, the timestamp of all sampling points on the sensor module 32 should be multiplied by $K_x$ to obtain the true timestamp of the points on the secondary master clock, and the sampling points are mapped to the time point of the integer multiples of the sampling period $\Delta T_x$ which is based on the sampling rate $K_x$ of the secondary master clock, for the purpose of rearrangement. The converted timestamp of each sampling point should be placed at a position closest to the integer multiples of the sampling period $\Delta T_x$. It can also be guaranteed that the sampling rate of the converted sensor data on the secondary master clock is also $F_x$, with excess points to be removed and missing points added.

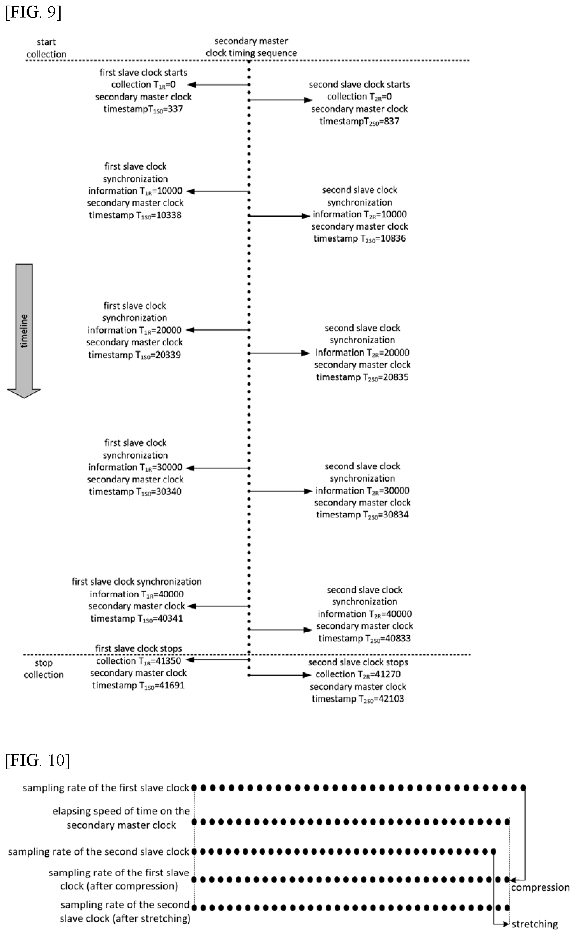

As shown in FIG. 9, due to presence of network delay, there is a difference between the start times of the sensor module 32-1 and the sensor module 32-2. The timestamps of the start times on the secondary master clock are respectively T1s0=337 and T2s0=837 (when the sensor modules 32 start, the secondary master clock can collect slave clock signals sequentially). After the sensor modules 32 start, their sensors will obtain sampling points uniformly under the operation of the slave clocks. When the sampling points are collected to the M multiples of the sampling rate, (the slave clocks run for M seconds). In this example, M is 10. Since there is a speed difference between the slave clocks and the secondary master clock, after the slave clocks of the sensor module 32-1 and the sensor module 32-2 run for 10000 ms respectively, the timestamps at the time of the secondary master clock receiving the slave clock signals sent from them are T1s0=10338 (the slave clock runs more slowly than the secondary master clock) and T2s0=10836 (the slave clock runs faster than the secondary master clock) respectively. As a result, the following can be calculated out:

$$K_1 = (10338-337)/10000 = 10001/10000$$

$$K_2 = (10836-837)/10000 = 9999/10000$$

Since the speed difference of the slave clocks and the secondary master clock results from the crystal oscillator deviation, $K_x$ in two adjacent slave clock signal periods of each sensor module 32 theoretically are same. But, in fact, the crystal oscillator deviation is liable to temperature and other factors, and $K_x$ is always changing. Therefore, it is only required to update the value of $K_x$ during each alignment operation of the timestamps.

After the latest $K_x$ value is obtained, each time the master collection control module 31 receives the collection data packets from the sensor modules 32, the master collection control module 31 needs to multiply the timestamp of the sampling points in the collection data packets by the value of $K_x$ to obtain the timestamp of the secondary master clock by conversion; then these sampling points are uniformly distributed on the timestamp of the secondary master clock at the set sampling rate.

For example, after $K_1$=1.0001 is obtained by calculation, the timestamp of each sampling point of the sensor module 32-1 on the secondary master clock is:

$$T'_1 = T_1 K_1 = 1.0001 T_1$$

Because the first slave clock corresponding to the sensor module 32-1 runs more slowly than the secondary master clock, the sampling rate of the sensor of the sensor module 32-1 on the secondary master clock is:

$$F'_1 = 10000 F_1 / 10001$$

Therefore, on the time line of the secondary master clock, the sampling rate of the sensor of the sensor module 32-1 is insufficient. The master collection control module 31 must, based on the sampling rate set for the sensor module 32-1, redistribute timestamps for these sampling points. In case of insufficient sampling points, it is needed to add the sampling points at the time points of the missing points. Herein, it is noted that, when alignment synchronization is performed on the collection data packets based on the difference mapping mode, point addition is always done at the end of the synchronization initiation period; when alignment synchronization is performed on the collection data packets based on the scaling mapping mode, point addition operation is carried out each time missing sampling points are detected within 1ms.

After $K_2 = 0.9999$ is obtained by calculation, the timestamp of each data point of the sensor module 32-2 on the secondary master clock is:

$$T_2' = T_2 K_2 = 0.9999 T_2$$

Because the second slave clock corresponding to the sensor module 32-2 runs faster than the secondary master clock, the sampling rate of the sensor of the sensor module 32-2 on the secondary master clock is:

$$F_2' = 10000 F_2 / 9999$$

Therefore, on the time line of the secondary master clock, the sampling rate of the sensor of the sensor module 32-2 exceeds expectation. The master collection control module 31 must, based on the sampling rate set for the sensor module 32-2, redistribute timestamps for these sampling points. In case of excess sampling points, it is needed to remove the sampling points at the time points of the excess points. Herein, it is noted that, when alignment synchronization is performed on the collection data packets based on the difference mapping mode, point removal is always done at the end of the synchronization initiation period; when alignment synchronization is performed on the collection data packets based on the scaling mapping mode, point removal operation is carried out each time repeated sampling points are detected within 1ms.

In the whole collection process, the synchronization alignment operation is carried out based on the above principle. When alignment synchronization is performed on the collection data packets based on the scaling mapping mode, it is required to restore the true timestamp of each point of the sensor module 32 on the secondary master clock. Therefore, more computing power is to be consumed. In a specific application of this embodiment, the use of the difference mapping mode is preferred for performing alignment synchronization on the collection data packets. When the cumulative deviation calculated for performing alignment synchronization on the collection data packets based on the difference mapping mode exceeds the set determination threshold, data alignment and processing is performed based on the scaling mapping mode depending on conditions, greatly reducing the influence of a large number of added or removed points on the true signal. In this embodiment, based on the determination threshold, two synchronization alignment modes are selected, ensuring both modest computing power and data truth.

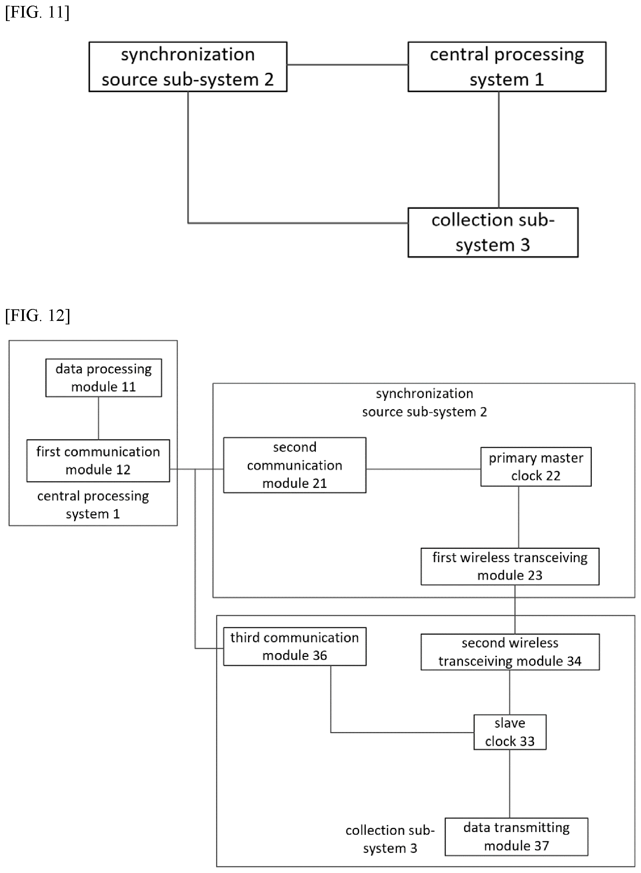

As shown in FIGS. 11 and 12, at least one embodiment provides a multi-device multi-physiological-parameter synchronization device, including a central processing system 1, a synchronization source subsystem 2 and at least two collection sub-systems 3; the central processing system 1 sends at least one synchronization instruction to the synchronization source subsystem 2; the synchronization source sub-system 2, based on the synchronization instruction, respectively generates a third synchronization information packet and a first synchronization information packet; the collection sub-systems 3 obtain and check the first synchronization information packet, and generate a second synchronization information packet based on a check result; the central processing system 1 obtains the third synchronization information packet and the second synchronization information packet and performs information matching to align the collection data packets of the collection sub-systems 3.

For realizing data synchronization with multiple independent collection sub-systems 3, compared with the existing synchronization solutions, each time the multi-device multi-physiological-parameter synchronization device in this embodiment performs wireless data synchronization operation, the synchronization source sub-system 2 sends the synchronization information packets to the central processing system 1 and the collection sub-systems 3 at the same time; the central processing system performs data alignment fusion based only on the time information in the synchronization information packets and the collection data packets. In the existing synchronization solutions, each time synchronization is initiated, the central processing system 1 randomly generates a synchronization random number and performs handshake with the sub-system (slave clock) of each independent collection device to notify them to prepare to receive a synchronization signal with the content as the synchronization random number. Then, the central processing system 1 notifies this synchronization random number to the primary master clock and controls the synchronization source to send a synchronization signal to the slave clock through the secondary master clock in the form of radio broadcast (when one set of radio signals is sent instantaneously, the nearby radio receiving devices theoretically can receive this signal almost at the same time). When determining the synchronization random number in the received synchronization information packet is consistent with the latest synchronization random number received from the central processing system, the slave clock determines the synchronization is successful and clear its own timestamp to zero. At this time, the central processing system 1 performs handshake again with the slave clock and obtains its latest synchronization random number. If the synchronization random number of the slave clock is consistent with the latest synchronization random number of the central processing system 1, it means the slave clock successfully receives the synchronization signal of the primary master clock and the central processing system 1 and the primary master clock realize successful synchronization with the slave clock; otherwise, it is deemed that the central processing system 1 and the primary master clock fail to realize synchronization with the slave clock. In these prior arts, with the synchronization random number generated by the central processing system as a determination reference, frequent information interaction is required among the central processing system, the master clock and the slave clock. In the embodiment 4 of the present disclosure, the following step is saved: in the existing synchronization solutions, each time the synchronization is initiated, the central processing system 1 needs to not only interact with the primary master clock 22 to transmit the synchronization random number but also transmit the synchronization random number with the slave clock 33 of each independent collection sub-systems 3 and meanwhile, the central processing system, after controlling the primary master clock 22 to send the synchronization information packets, interacts with each slave clock 33 to determine whether the synchronization is successful in the form of checking the synchronization random code. When there are many independent collection sub-systems 3 in the system, the synchronization process of the existing synchronization solutions will be more tedious, leading to large computational load, and requiring the central processing system 1 and/or collection sub-systems 3 with high processing capability, and thus leading to high cost of the whole synchronization device. The synchronization random number is sent by the central processing system 1. Due to the stability problem of the wireless network signals, the times of receiving the synchronization codes by multiple collection sub-systems 3 are undetermined. If the wireless network signals are unstable, multiple collection sub-systems 3 need to take extremely much time to complete one synchronization flow, resulting in inability to complete the synchronization of all devices within one synchronization initiation period, and ensure the synchronization stability of the whole system.

In some embodiments, the set synchronization source sub-system 2 can, based on the synchronization instruction, respectively generate the third synchronization information packet and the first synchronization information packet, which avoids frequent information interactions between the central processing system 1 and each collection sub-system 3 during the synchronization period. When there are many collection sub-systems 3, collection steps are simple and multiple collection sub-systems perform synchronization with the synchronization source sub-system, avoiding the case that multiple collection sub-systems cannot complete synchronization within one synchronization initiation period due to instability of the wireless network signals of the central processing system and the slave clocks, and further ensuring synchronization stability.

The synchronization clock unit 311 of each collection sub-system 3, as a secondary master clock, is connected with the primary master clock 22 in the synchronization source sub-system, and the synchronization source sub-system 2, based on the synchronization instruction from the central processing system 1, respectively generates the third synchronization information packet and the first synchronization information packet and sends the first synchronization information packet to the synchronization clock unit 311 of the collection sub-system 3. The synchronization clock unit 311 sends the first synchronization information packet in a synchronization initiation period; the sensor module 32 of the collection sub-system 3 obtains and checks the first synchronization information packet and generates the second synchronization information packet based on a check result. The temporal synchronization method of the data collected by each sensor module 32 of each collection sub-system can be referred to the preceding single-device multi-physiological-parameter synchronization and fusion method and no redundant descriptions are made herein.

In some embodiments, the third synchronization information packet generated by the synchronization source sub-system 2 based on the synchronization instruction includes time information, i.e. a third timestamp, for the synchronization source sub-system 2 to initiate synchronization, a unique identification code and a synchronization sequence number, and the first synchronization information packet includes a unique identification code and a synchronization sequence number. The collection sub-systems 3 are in one-to-one correspondence with the unique identification codes. The collection sub-systems 3 check the first synchronization information packet, which includes the following steps:

The collection sub-systems 3 check whether the first synchronization information packet contains an agreed unique identification code; in case of no agreed unique identification code, the collection sub-systems 3 do not respond to the synchronization instruction; in case of an agreed unique identification code, the collection sub-systems 3 respond to the synchronization instruction, obtain a synchronization sequence code, and generate a second synchronization information packet in combination with current time. The second synchronization information packet includes: a synchronization sequence code, a unique identification code and a second timestamp.

It should be noted that in the existing synchronization solutions, the synchronization random code is generated by the central processing system, and the synchronization information packets of multiple collection systems in an environment are liable to mutual interference. When there is a collection system formed by multiple central processing systems, the slave clocks and the primary and secondary master clocks in an environment (for ease of examples, two same systems A and B in the environment), because the determination basis for the central processing system 1 to determine the successful synchronization of the slave clocks and the primary and secondary master clocks is the synchronization random code generated by the central processing system 1, there will be consistency of the synchronization random codes of the systems A and B, and the slave clock in the system A can receive the wireless data synchronization information packet from the system B at the same time, and vice versa. In other words, the slave clock of the system A will receive the synchronization information packet it deems valid at a wrong time and reset its own timestamp, and so does the slave clock of the system B. The synchronization mechanisms of the systems A and B will be in disorder. In this embodiment, by using the unique identification codes in one-to-one correspondence with the collection sub-systems 3, whether to respond to the synchronization instruction is determined, which solves the disorderly synchronization mechanism between the multiple collection sub-systems 3 brought by the synchronization random codes in the existing synchronization solutions.

In the existing synchronization solutions, the synchronization random code used for each synchronization is generated by the central processing system 1, and there is no logical relationship between the synchronization random codes of multiple synchronization flows. When non-real-time data processing is performed, it is impossible to determine in which synchronization flow a certain synchronization random code becomes valid during data analysis, nor perform integration and synchronization operation on these data. In this embodiment, the synchronization device sends the synchronization information packets by using the synchronization source sub-system, and the information packets include a unique identification code and a synchronization sequence number. With the use of the unique identification code and the synchronization sequence number, the collection sub-systems 3 can quickly and accurately determine whether to perform synchronization action and accurately determine after which synchronization flow the data occurs, solving the problem of inability to perform non-real-time data synchronization processing in the existing synchronization solutions.

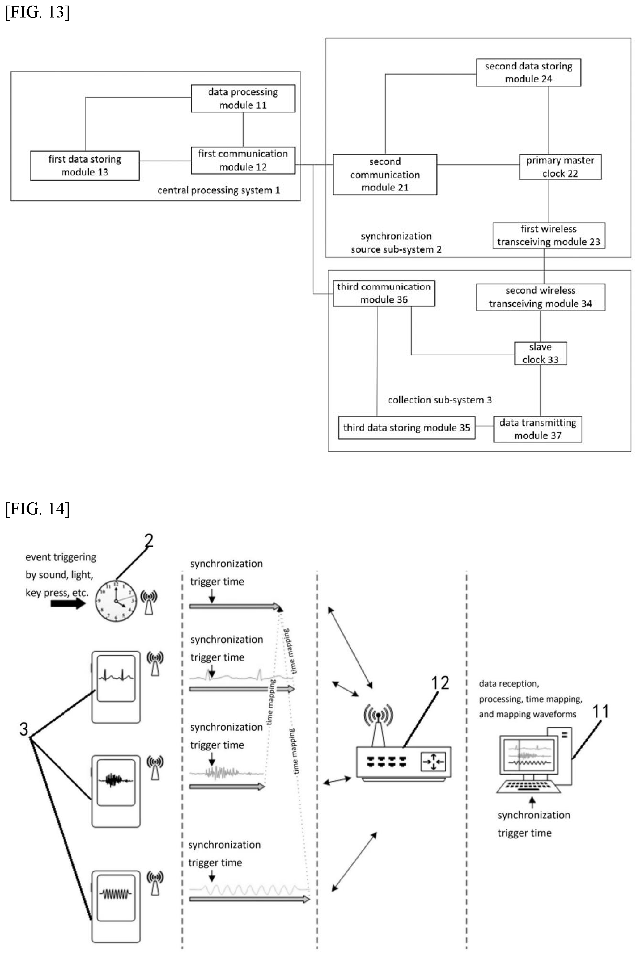

As shown in FIG. 13, in some embodiments, the central processing system 1 includes a data processing module 11 and a first communication module 12; the data processing module 11 is connected with the first communication module 12, and the synchronization source sub-system 2 and the collection sub-systems 3 are all connected to the first communication module 12; the first communication module 12 establishes wireless network connection based a second communication protocol to ensure effective and accurate transmission of data among the central processing system 1, the synchronization source sub-system 2 and the collection sub-systems 3.

Specifically, the third synchronization information packet includes a third timestamp, a unique identification code and a synchronization sequence code; the data processing module 11 of the central processing system 1 determines the synchronism of the third synchronization information packet the second synchronization information packet based on the time mapping. The time mapping includes: based on the third timestamp $T_{S0}$ in the third synchronization information packet and the second timestamp $T_{SX}$ in the second synchronization information packet, calculating a collection timestamp $T_Z$ corresponding to the collection data packets to obtain a synchronization occurrence time of the third synchronization information packet and the second synchronization information packet and map the corresponding timestamp information to the collection data packets. In the present disclosure, the synchronization device does not need to performing zero clearing on the slave clock corresponding to each collection sub-system 3 but, based on the time mapping, with the time information of the synchronization source sub-system 2 as reference, calculate the time information corresponding to the collection data packets of each collection sub-system 3, which ensures the data synchronization of the collection data packets of multiple collection sub-systems 3 while not affecting the time information of the collection sub-systems 3.

In some embodiments, the central processing system 1 performs arrangement and storage based on data information of the aligned collection data packets and a parameter configuration of the collection sub-systems 3. The parameter configuration of the collection sub-systems 3 includes at least one of bit number, length, sampling rate and packet transmission rate; the data information of the aligned collection data packets includes a stimulation event and/or an environmental variable and/or related physiological parameters. In the present disclosure, due to different actual needs, different collection sub-systems 3 may send to the central processing system 1 the data packets different in formats such as data length, sampling rate and packet transmission rate and so on. For those slowly-changing environmental variables such as temperature and humidity and so on, the data sampling rate is low, the packet transmission rate is high, and each packet contains small data volume. When the EEG physiological parameters are collected, the EEG data changes fast and the high accuracy is required and thus the packet transmission rate of the data is modest and each packet contains large data volume. The central processing system is in charge of performing arrangement storage or other operations on the data based on actual needs in combination with the information such as the length, sampling rate, and packet transmission rate and the like of the received data.

As shown in FIGS. 12 and 13, the synchronization source sub-system 2 in this embodiment includes: a second communication module 21 which is in communication with the first communication module 12 based on the second communication protocol; and a primary master clock 22, configured to initiate the third synchronization information packet and the first synchronization information packet in a set synchronization initiation period. The synchronization source sub-system 2 further includes: a first wireless transceiving module 23, configured to receive a synchronization instruction, and transmit the third synchronization information packet and the first synchronization information packet. Each collection sub-system 3 includes: a third communication module 36, connected with the first communication module 12 based on the second communication protocol; a slave clock 33, configured to generate a corresponding timestamp, that is, to generate the second timestamp and the collection timestamp. Each collection sub-system 3 further includes a data transmitting module 37 and a second wireless transceiving module 34. The data transmitting module 37 is configured to transmit the collection data packets, and the second wireless transceiving module 34 is configured to receive a synchronization instruction and the first synchronization information packet. The collection sub-systems 3 are one or more of a stimulator, an environmental variable collection device and a physiological collection device.

It should be noted that the second communication protocol is a connection-oriented communication protocol, preferably, a TCP/IP protocol, Bluetooth, or Bluetooth BLE protocol. The communication protocol between the first wireless transceiving module 23 and the second wireless transceiving module 34 is a wireless connection protocol, preferably, but not limited to UDP protocol or ICMP protocol.

In some embodiments, the setting method of the synchronization initiation period includes the following: An initial synchronization initiation period is set. Before the collection sub-systems 3 start collection, setting is made based on crystal oscillators of the corresponding sensor modules in the collection sub-systems 3. Furthermore, Taking the crystal oscillator of $\pm X$ ppm (deviation X seconds per million seconds) in the collection sub-systems 3 as example, the clock deviation between the collection sub-systems 3 is not greater than 2Xppm, namely, each time the collection sub-systems 3 work for an interval of not less than 500000/X ms, the clock may generate a deviation of 1 ms. At this moment, it is only required to ensure the synchronization period is less than 50000/X ms and control the synchronization accuracy of the synchronization source sub-system 2 and the collection sub-systems 3 within 1 ms. Especially, when X=10, it is only required to complete one synchronization within 50 seconds so as to realize the synchronization accuracy of less than 1ms. On the contrary, if it is required to complete one synchronization within Y seconds, it is required to ensure the clock of the collection sub-systems 3 and the synchronization source sub-system 2 has a deviation of less than 1ms within Y seconds. The crystal oscillator deviation of the collection sub-systems 3 and the synchronization source sub-system 2 shall not be greater than 1/1000Y, i.e. shall be less than 1000/Y ppm, and thus the synchronization accuracy of at least 1ms can be guaranteed. Therefore, using the crystal oscillators with high accuracy can, during each synchronization, reduce the operation frequency in which the central processing system 1 performs sampling point addition or removal on the data of the collection sub-systems 3.

A dynamic synchronization initiation period is set. After the collection sub-systems 3 start collection, when the central processing system 1 detects frequent occurrence of addition or removal of data of sampling points, the central processing system 1 sends a dynamic adjustment instruction to the collection sub-systems 3. Furthermore, when the environmental impact is large (e.g. temperature or humidity or the like), the stability of the crystal oscillator may be affected, resulting in fluctuations and unable to achieve the desired effect. At this time, the impact of the fluctuations of the crystal oscillator may directly affect the data collection of the sensors, leading to less or more sampling points of the sensors in the synchronization initiation period. Therefore, when the collection sub-systems 3 process the sensor data of the external probes, if the behavior of addition or removal of sampling points occurs frequently, it can be considered that, within the synchronization initiation period, the point number of the sensor data of the external probes fails to reach the design expectation (more or less compared with the expected value), and the central processing system 1 detects the frequent occurrence of addition or removal of data of sampling points. The central processing system 1 sends a dynamic adjustment instruction to the collection sub-systems 3 to control shortening or increasing the synchronization initiation period of the collection sub-systems 3, thereby improving the sending frequency of the synchronization signals. Therefore, based on the above principle, the accuracy of the crystal oscillator in the clock source unit is improved and the synchronization response time is shortened, so as to ensure the appropriateness of the synchronization initiation period, obtaining higher synchronization accuracy (<lms).

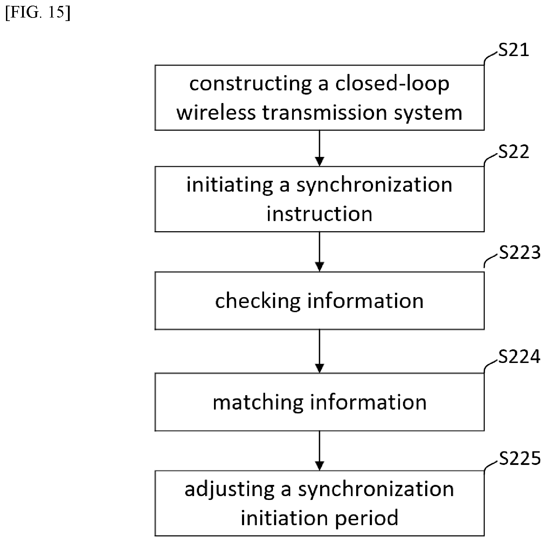

At least one embodiment provides a multi-device multi-physiological-parameter synchronization method. As shown in FIG. 15, the method includes the following steps:

At step S21, a closed-loop wireless transmission system is constructed using the above multi-device multi-physiological-parameter synchronization device. A one-to-one relationship is formed between the synchronization source sub-system 2 and the central processing system 1, one-to-many relationship is formed between the synchronization source sub-system 2 and the multiple collection sub-systems 3, and a many-to-one relationship is formed between the multiple collection sub-systems 3 and the central processing system 1.

At step S22, a synchronization instruction is initiated. The central processing system 1 sends a synchronization instruction to the synchronization source sub-system 2, and the synchronization source sub-system 2, after receiving the synchronization instruction, sends a third synchronization information packet to the central processing system 1 and sends a first synchronization information packet to the multiple collection sub-systems 3 at the same time.

In the step S22, each time the synchronization source sub-system 2 sends the third synchronization information packet and the first synchronization information packet, the synchronization source sub-system 2 requests continuous synchronization updating on a synchronization sequence number of each synchronization information packet. After each synchronization, the synchronization sequence number can increase, ensuring during a non-real-time data processing, it can also be determined after which synchronization flow the data occurs based on the synchronization sequence number in each synchronization information packet. This also provides a possibility that the central processing system 1 performs synchronization and analysis on the data stored locally by the collection sub-systems 3, avoiding the packet loss resulting from unstable wireless network and bringing good stability.

At step S223, information checking is performed. The multiple collection sub-systems 3 receive the first synchronization information packet and then check information, generate a second synchronization information packet after validating a check result, and transmit the second synchronization information packet to the central processing system 1. Furthermore, the validation process includes the following steps: the collection sub-systems 3 check whether the first synchronization information packet contains an agreed unique identification code; in case of no agreed unique identification code, the collection sub-systems 3 do not respond to the synchronization instruction; in case of an agreed unique identification code, the collection sub-systems 3 responds to the synchronization instruction, and obtains a current synchronization sequence number, and generates the second synchronization information packet in combination a current timestamp.

At step S224, information matching is performed. The central processing system 1 performs information matching on the third synchronization information packet and the second synchronization information packet.

Furthermore, the data processing module 11 of the central processing system 1 determines the synchronism of the third synchronization information packet and the second synchronization information packet based on the time mapping to align collection data packets; the central processing system 1, based on the data information of the collection data packets, determines the processing method of executing the collection data packets and the storage position of each sampling point so as to perform arrangement storage on the aligned collection data packets. Arrangement is performed on the collection data with the timestamps aligned by each collection sub-system 3, in an order of the timestamps on the clock of the synchronization source sub-system 2. If the sampling rate is inconsistent, the sparsity of the arranged sampling points can be different. The central processing system 1 stores these arranged sampling points for mapping waveforms or other purposes.

At step S225, the synchronization initiation period is adjusted. The initiation period of the synchronization instruction is dynamically adjusted based on the matching result.

The central processing system 1 determines a synchronization occurrence time based on a third timestamp $T_{S0}$ and a second timestamp $T_{SX}$, calculates a collection timestamp $T_Z$ corresponding to the collection data packets, and performs data processing and alignment operation on the received collection data packets. The data of the collection data packets is aligned data. When an external stimulation is generated, the collected tested multi-parameter physiological signals are valid data, having research value.

It should be further noted that the central processing system 1 recalculates time information $T_Z$ in the collection data packets by a mapping formula based on the time information $T_X$ in the collection data packets transmitted by the collection sub-systems, the timestamp $T_{S0}$ for the synchronization source sub-system 2 to initiate synchronization, and the second timestamp $T_{SX}$. The above mapping formula is as below:

$T_Z = T_{S0} + (T_X - T_{SX})$, S=1, 2, 3, 4..., wherein S represents a number of synchronizations, which accumulates along with the sending of the synchronization information packet.

The strategy of two collection sub-systems 3, the sampling rate of 1000Hz (T1=1ms), single sampling point packetization, and the clock of the synchronization source sub-system 2 running to make one generation at an interval of 10s is taken as example for illustration, and similar operation can be made for the slave clocks 33 in sampling rate, packetization mechanism, and data processing and alignment method under the synchronization initiation period.

After the step S21 is completed, two collection sub-systems 3 are started for transmission and the wireless transceiving module of the synchronization source sub-system 2 is started. Because the synchronization command is based on the connection-oriented communication protocol, and the command transmission has a delay, each collection sub-system 3 does not start accumulating their own timestamp at a same time.

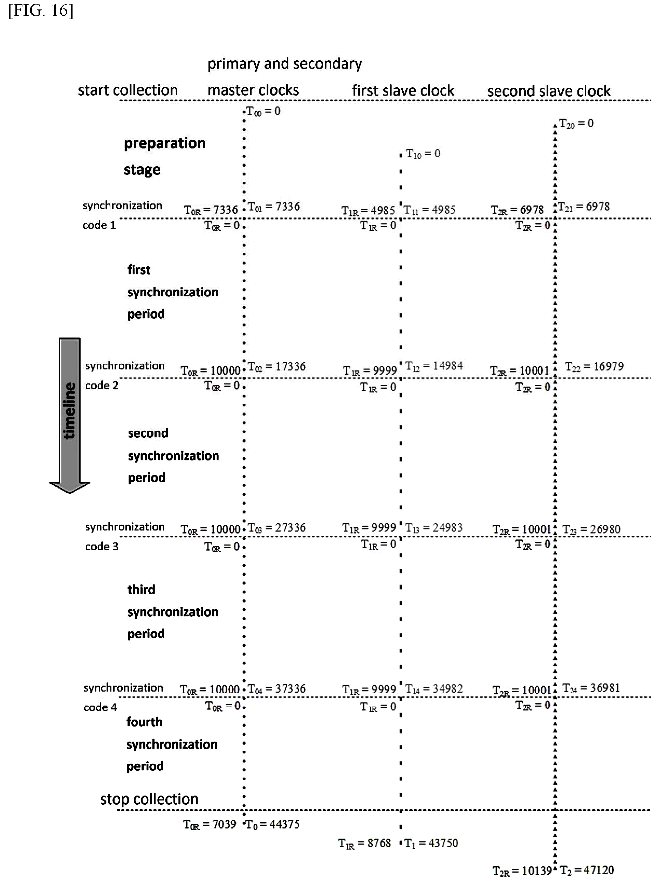

The central processing system 1 obtains the collection data packets of the collection sub-systems 3, and the third synchronization information packet at the time of each synchronization trigger. The whole process is as shown in FIG. 16.

In the preparation stage, due to communication delay, the clocks of the collection sub-systems 3 are not started at the same time. Since the first synchronization is completed this time, the data packets of the sub-systems in this preparation stage are all in unsynchronized state. Therefore, the central processing system 1 can discard these data. Due to individual difference of the clock sources (crystal oscillators), the clock of each sub-system is surely faster or slower. In order to ensure the synchronism between the collection sub-systems 3, it is to be guaranteed that each collection sub-system 3 maintains a same sampling point number within each synchronization initiation period.

At the first synchronization time (synchronization sequence number is 1), the timestamp of the synchronization information packet uploaded by each sub-system already accumulates to $T_{00}$, $T_{01}$ and $T_{02}$. At this time, the central processing system 1 obtains each timestamp and subtracts $T_{00}$, $T_{01}$ and $T_{02}$ from the timestamp respectively to calculate relative timestamps $T_{0R}$, $T_{1R}$ and $T_{2R}$ of each collection data packet. Therefore, after each synchronization time, the $T_{0R}$, $T_{1R}$ and $T_{2R}$ can accumulate again from 0 until the next synchronization time.

When the second synchronization time (after the clock of the synchronization source sub-system 2 runs for 10s; the synchronization sequence number is 2) arrives, the relative timestamp of the synchronization source sub-system 2 accumulates to $T_{0R}$ = 10000 . Due to difference between the clock source of the collection sub-systems 3 and that of the primary master clock 22, the relative timestamp accumulates to $T_{1R}$ = 9999 (the clock is a little slower than the synchronization source sub-system 2), and $T_{2R}$ = 10001 (the clock is a little faster than the synchronization source sub-system 2) respectively. The central processing system 1 can add the data of (10000-9999) points to the collection sub-systems 3; and remove the data of (10001-10000) points from the collection sub-systems 3. In this case, it can be ensured that during the synchronization period, the collection sub-systems 3 and the sub-system 2 can upload complete data of 10000 sampling points.

At each synchronization time and within each synchronization period, the central processing system 1 processes the collection sub-systems 3 and the synchronization source sub-system 2 by the above processing method until the collection process is stopped.

The above clock characteristics of the collection sub-systems 3 (e.g. always a little faster or slower than the clock of the synchronization source sub-system 2 within 10s) are for the purpose of examples, and the actual deviation is related to the performance of the selected crystal oscillator. If the accuracy of the crystal oscillator is fixed and more sampling points are to be added or removed within each synchronization period, the influence of the cumulative error of the clock on the signal quality can be reduced by adjusting the synchronization initiation period.

While solving the problem that the multiple collection sub-systems 3 lose temporal correlation with the increase of the collection time, this embodiment realizes accurate wireless data synchronization within a long time, which not only improves the synchronization efficiency but also ensures stable data transmission. Particularly, when there are multiple collection sub-systems 3, the collection steps are simple, and good stability can be achieved, realizing non-real-time data synchronization processing. In addition, the collection sub-systems 3 can record the timestamp of this synchronization time by simply receiving the synchronization instruction and then generating one synchronization information packet, saving the computing power of the collection sub-systems 3, and simplifying the processing logic of the central processing system 1.

Wireless transmission as main is carried out among multiple independent signal collection devices. Since the signal collection devices work under their respective clock sources and there is an inherent clock deviation between the clock sources, the triggered collection number between the devices may have a deviation within a same natural time. When analysis is performed on these data, the deviated collection number may enable the data between the collection devices to lose its temporal correlation.

The existing multi-device multi-physiological-parameter collection is used online. The central processing system 1, for example PC, is used to receive in real time, process online and map the sensor data of the collection sub-systems 3, and control the synchronization modules to initiate a real-time synchronization task, completing the online synchronization of all sub-systems. When the network environment fluctuates, for example, when the wireless network environment is poor, it is difficult to ensure the timeliness and a low packet loss rate of the collection data packets, leading to failure of the central processing system 1 to realize the functions such as online analysis and preview and the like. Further, after the central processing system 1 starts each collection sub-system 3, once a certain collection sub-system 3 leaves the current environmental environment, for example, the user walks out of lab holding a wireless collection device, the central processing system 1 for processing its data online will be unable to obtain the sensor data at this time, and the data in this period will be lost. The users have to stay in the current network environment during the experimental periods, limiting the free movement space of the users to some degree.

At least one embodiment further provides an offline collection device which can avoids the problem that the sensor data of the collection sub-systems 3 is lost once the device goes offline due to bad wireless network environment. As shown in FIGS. 13 to 15, the offline collection device further includes the following: the synchronization source sub-system 2 further includes a second data storing module 24; the collection sub-systems 3 further include a third data storing module 35; the central processing system 1 only sends one synchronization instruction to the synchronization source sub-system 2 and stores the synchronization instruction in the second data storing module 24 and sets it as a synchronization instruction of the synchronization source sub-system 2; the third data storing module 35 is configured to store collection data packets and a second synchronization information packet, and the second data storing module 24 is further configured to store a third synchronization information packet.

It should be noted that the central processing system 1, before sending a synchronization instruction to the synchronization source sub-system 2, communicates with the synchronization source sub-system 2 and each collection sub-system 3 respectively based on the second communication protocol, and sends experimental information to the synchronization source sub-system 2 and each collection sub-system 3; and the second data storing module 24 of the synchronization source sub-system 2 and the third data storing module 35 of each collection sub-system 3 store the experimental information respectively. The experimental information includes patient information, experimental site, experiment start time, experiment ending time, as well as the identity information of the synchronization source sub-system 2 and the collection sub-systems 3 used in this experiment.

In some embodiments, the central processing system 1 further includes a first data storing module 13 for locally storing the experimental information.

The central processing system 1 obtains the locally-stored data of the second data storing module 24 and the third data storing module 35 for data processing and alignment. Specifically, the central processing system 1 obtains the third synchronization information packet stored in the second data storing module 24 and the second synchronization information packet stored in the third data storing module 35. The central processing system 1, in combination with the experimental information, performs information matching on the third synchronization information packet and the second synchronization information packet to align the collection data packets.

In some embodiments, the central processing system 1 sends one synchronization instruction to the synchronization source sub-system 2 only at the initial setting, and the synchronization source sub-system 2 stores a command flow of uplink synchronization instruction and sends a command flow of downlink synchronization information packet. The uplink and downlink command flows between each collection sub-system 1 and the central processing system 1 are all stored in the local data storing module. When network connection between the central processing system and the collection sub-systems 3 fails (e.g. network is interrupted), the synchronization source sub-system 2 and the collection sub-systems 3 can still complete subsequent synchronization services, and the set data storing modules provide a possibility for the offline use of the collection devices (the devices locally store data rather than directly transmit the data to the central processing system 1). The setting data storing modules firstly store data, experimental information and command flow and then the central processing system 1 obtains, for the purpose of analysis use, the synchronization signals and collection data during a period when it loses its wireless connection and, performs synchronization on the offline data collected by each collection sub-system 3. With the offline collection and offline data synchronization capabilities, the problems of increased packet loss rate and real-time data non-reliability due to unstable wireless network environment can be avoided largely; it is applicable to an application scenes with multiple devices. Further, the collected offline data has synchronism and the stored data has high experimental value.

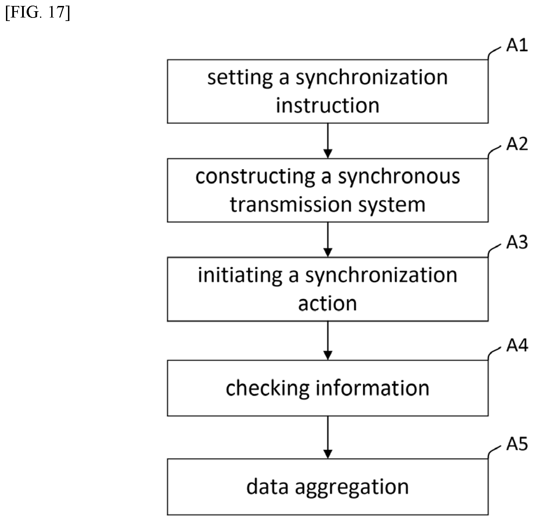

At least one embodiment further provides a multi-device multi-physiological-parameter offline collection method. As shown in FIG. 17, the offline collection method includes:

At step A1, a synchronization instruction is set. The synchronization instruction of the synchronization source sub-system 2 is set by the central processing system 1.

At step A2, a synchronous transmission system is constructed. A one-to-many relationship is formed between the synchronization source sub-system 2 and multiple collection sub-systems 3.

At step A3, a synchronization action is initiated. The synchronization source sub-system 2 initiates a synchronization action to form a third synchronization information packet and a first synchronization information packet; the synchronization source sub-system locally stores the third synchronization information packet, and sends the first synchronization information packet to the synchronization clock unit of multiple collection sub-systems; the synchronization clock unit then sends the first synchronization information packet in a synchronization initiation period.

At step A4, information is checked. The sensor modules of multiple collection sub-systems receive the first synchronization information packet and then check information and then generate a second synchronization information packet after validating a check result; the multiple collection sub-systems locally store the second synchronization information packet;

the collection sub-systems 3 check whether the first synchronization information packet contains an agreed unique identification code;

in case of no agreed unique identification code, the collection sub-systems 3 do not respond to the synchronization instruction;

in case of an agreed unique identification code, the collection sub-systems 3 respond to the synchronization instruction, obtain a current synchronization sequence number and in combination with a current timestamp, generate the second synchronization information packet.

In some embodiments, the method further includes: at step A5, data aggregation is performed. The central processing system 1 obtains the third synchronization information packet stored in the second data storing module 24 and the second synchronization information packet stored in the third data storing module 35; the central processing system 1, in combination with experimental information, performs information matching on the third synchronization information packet and the second synchronization information packet to align the collection data packets. Furthermore, the central processing system 1 performs re-alignment processing on the timestamps of the collection data packets in combination with the timestamp information of each synchronization information packet, and performs synchronization, dumping, replay and analysis on the offline data with the processed timestamps.

In some embodiments, before the step A1 is performed, the central processing system 1 sends the experimental information to the synchronization source sub-system 2 and each collection sub-system 3, and the second data storing module 24 of the synchronization source sub-system 2 and the third data storing module 35 of each collection sub-system 3 respectively store the experimental information.

The strategy of two collection sub-systems 3, the sampling rate of 1000Hz (T1=1ms), single sampling point packetization, and the clock of the synchronization source sub-system 2 running to make one generation at an interval of 10s is taken as example for illustration, and similar operation can be made for the slave clocks 33 in sampling rate, packetization mechanism, and data processing and alignment method under the synchronization period.

After completing the step A1 and step A2, the central processing system 1 starts two collection sub-systems 3 for transmission and starts the wireless transceiving module of the synchronization source sub-system 2. Since the control command is based on a connection-oriented communication protocol and transmission of the command has a delay, each collection sub-system 3 does not start accumulating respective timestamps at a same time.

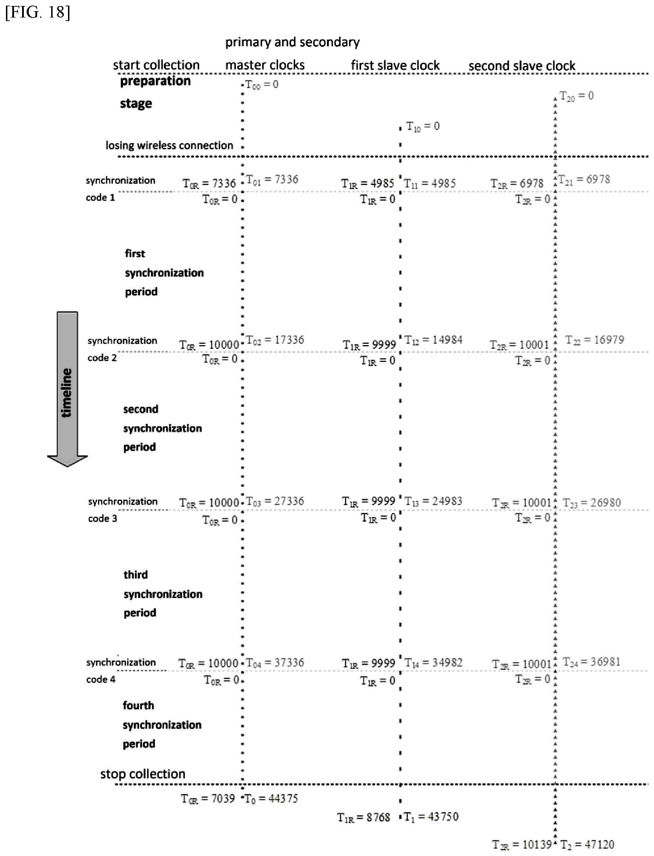

After the central processing system 2 starts collection, the collection sub-system 3 locally store the collection data packets as well as the second synchronization information packet at the time of each synchronization trigger. The synchronization source sub-system 2 locally stores all synchronization information packets, experimental information and command flows, with the whole process shown in FIG. 18.

After the collection is stopped, the central processing system 1, based on the locally-stored experimental information, pick out the offline data corresponding to experiment from the sub-systems, and reads and processes the data based on the following principle.

The data collected before the first synchronization information packet is read is deemed as the data of the experiment preparation stage. At this time, due to communication delay, the clocks of the sub-systems do not start at the same time. Since the first synchronization is not completed this time, the collection data packets of the collection sub-systems 3 in this preparation stage are in unsynchronized state. Therefore, the central processing system 1 can discard these data.

Due to individual difference of the clock sources (crystal oscillators), the clock of each sub-system will be surely faster or slower. At this time, in order to enable the system to have synchronism, it should be guaranteed that each collection sub-system 3 maintains a consistent sampling point number within each synchronization period. It is assumed that, when the central processing system 1 reads the first synchronization information packet (synchronization sequence number 1) from the offline data of the synchronization source sub-system, the timestamp of the synchronization information packet uploaded by each sub-system already accumulates to $T_{00}$, $T_{01}$ and $T_{02}$. At this time, the central processing system 1 needs to subtract $T_{00}$, $T_{01}$ and $T_{02}$ from the timestamp of the later-read collection data packets stored in each collection sub-system 3 to calculate out the relative timestamps $T_{0R}$, $T_{1R}$ and $T_{2R}$ of each collection data packet. So, each time the central processing system 1 reads the synchronization information packet, the $T_{0R}$, $T_{1R}$ and $T_{2R}$ can accumulate again from 0, until reading the next synchronization information packet.

When the central processing system 1 reads the next synchronization information packet (the clock of the synchronization source sub-system 2 sends after running for 10s, and the synchronization sequence number is 2), the relative timestamp of the synchronization source sub-system 2 accumulates to $T_{0R}$ = 10000. Due to difference between the clock source of the collection sub-systems 3 and that of the primary master clock 22, the relative timestamp accumulates to $T_{1R}$ = 9999 (the clock is a little slower than the synchronization source sub-system 2), and $T_{2R}$ = 10001 (the clock is a little faster than the synchronization source sub-system 2) respectively. At this time, the central processing system 1 can add the data of (10000-9999) points to the collection sub-systems 3; and remove the data of (10001-10000) points from the collection sub-systems 3. In this case, it can be ensured that during the synchronization period, the collection sub-systems 3 and the synchronization sub-system 2 can upload complete data of 10000 sampling points.

After the central processing system 1 reads one synchronization information packet each time, the offline data of the collection sub-systems 3 and the synchronization source sub-system 2 can be processed by the above processing method until the stop command is read or all data are read.

The above clock characteristics of the collection sub-systems 3 (e.g. always a little faster or slower than the synchronization source sub-system 2 within 10s) are for the purpose of examples, and the actual deviation is related to the performance of the selected crystal oscillator. If the accuracy of the crystal oscillator is fixed and more sampling points are to be added or removed within each synchronization period, the influence of the cumulative error of the clock on the signal quality can be reduced by reducing the synchronization period.

In some embodiments, the synchronization source sub-system 2 is used to send a synchronization instruction, and send the first synchronization information packet via a wireless transmission frequency band not susceptible to environmental interference (wireless transceiving module). Even if the central processing system 1 loses wireless connection with the synchronization source sub-system 2 or the collection sub-systems 3, the synchronization source sub-system 2 and the collection sub-systems 3 still can maintain synchronization signal reception and sending operation between themselves based on the command flows stored in its own data storing modules. Since the data storing modules are added to the central processing system 1, the collection sub-systems 3 and the synchronization source sub-system 2, the synchronization instructions, experimental information, command flows, synchronization information and collection data and so on are stored firstly, and then the central processing system 1 obtains, for the purpose of analysis use, the synchronization information and collection data during a period when it loses its wireless connection and, performs synchronization on the offline data collected by each collection sub-system 3. With the offline collection and offline data synchronization capabilities, the problems of increased packet loss rate and real-time data non-reliability due to unstable wireless network environment can be avoided largely; it is applicable to an application scenes with multiple devices. Further, the collected offline data has synchronism and the stored data has high experimental value.

Although this patent document contains many details, these shall not be construed as limitations on the scope of any invention or claim, but rather as descriptions of features of specific embodiments of specific inventions. Certain features described in this patent document in the context of separate embodiments may also be implemented in combination in a single embodiment. Conversely, various features described in the context of a single embodiment may also be implemented separately in multiple embodiments, or implemented in any suitable subcombination. Further, although the above features may be described as acting in certain combinations and even initially claimed as such, in some cases, one or more features from a claimed combination may be removed from the combination, and the claimed combination may be directed to a subcombination or a variation of a subcombination.

In several embodiments provided herein, it should be understood that the disclosed devices and methods may also be implemented in other ways. The device embodiments described above are merely illustrative. For example, the flowcharts and block diagrams in the drawings illustrate the possible architectures, functions, and operations of devices, methods, and computer program products according to multiple embodiments of the present disclosure. In this regard, each block in the flowchart or block diagram may represent a module, a program segment, or a portion of code, and the module, the program segment, or the portion of code includes one or more executable instructions for implementing specified logical functions. It should also be noted that, in some alternative implementations, the functions noted in the blocks may occur in an order different from that noted in the drawings. For example, two successive blocks may, in fact, be executed substantially in parallel, and sometimes may also be executed in the reverse order, depending upon the functions involved. It should also be noted that each block in the block diagrams and/or flowcharts, and combinations of blocks in the block diagrams and/or flowcharts, may be implemented by special-purpose hardware-based systems that perform specified functions or acts, or by combinations of special-purpose hardware and computer instructions.

With the ideal embodiments of the present disclosure as inspiration, those skilled in the art can, based on the above description, make various changes and modifications without departing from the scope of the technical idea of the present disclosure. The technical scope of the present disclosure is not limited to the contents of the specification, and shall be determined according to the scope of the claims.

**Claims**

1. A single-device multi-physiological-parameter synchronization and fusion method, **characterized by** comprising:

   constructing a one-to-one wireless transmission system, namely, forming a one-to-one relationship between a central processing system (1) and a master collection control module (31); constructing a one-to-many wired transmission system, namely, constructing a wired connection between the master collection control module (31) and multiple sensor modules (32); initiating a synchronization instruction, wherein the central processing system initiates a synchronization instruction to the master collection control module (31), and the master collection control module (31) receives the synchronization instruction and then sends a first synchronization information packet to the multiple sensor modules (32) and records a timestamp $T_{S0}$ corresponding to the first synchronization information packet; checking information, wherein the multiple sensor modules (32) receive the first synchronization information packet and then check information, generate a second synchronization information packet after validating a check result, and transmit the second synchronization information packet to the master collection control module (31);

matching information, wherein the master collection control module (31) performs information matching on the second synchronization information packet and the timestamp $T_{S0}$ corresponding to the first synchronization information packet in a synchronization initiation period to align first collection data packets of the sensor modules (32).

2. The single-device multi-physiological-parameter synchronization and fusion method according to claim 1, **characterized in that**, the multiple sensor modules (32) receive the first synchronization information packet and then checks information, which comprises the following:

the multiple sensor modules (32) checks a timestamp $T_{SX}$ at the time of receiving the first synchronization information packet in respective synchronization initiation periods $t_{cn}$; if the timestamp $T_{SX}$ at the time of receiving the first synchronization information packet is consistent with the corresponding synchronization initiation period $t_{cn}$, the first synchronization information packet together with the timestamp $T_{SX}$ is generated into the second synchronization information packet;

if the timestamp $T_{SX}$ at the time of receiving the first synchronization information packet is inconsistent with the corresponding synchronization initiation period $t_{cn}$, the sensor modules (32) do not process the received first synchronization information packet.

3. The single-device multi-physiological-parameter synchronization and fusion method according to claim 2,

**characterized in that**,

the second synchronization information packet comprises the timestamp $T_{SX}$ at the time of receiving the first synchronization information packet by the sensor modules (32);

the first collection data packets comprise physiological data collected by the sensor modules (32) and a timestamp $T_X$ at the time of collection.

4. The single-device multi-physiological-parameter synchronization and fusion method according to claim 3,

**characterized in that**,

performing information matching on the second synchronization information packet and the timestamp $T_{S0}$ corresponding to the first synchronization information packet in a synchronization initiation period specifically comprises the following: the master collection control module (31) recalculates time information $T_Z$ in the collection data packets by a mapping formula based on the time information $T_X$ in the first collection data packets, the timestamp $T_{S0}$ for the master collection control module (31) to initiate synchronization, and the timestamp $T_{SX}$ in the second synchronization information packet.

5. The single-device multi-physiological-parameter synchronization and fusion method according to claim 4, **characterized in that**, the mapping formula is as below:

$T_z = T_{S0} + (T_X - T_{SX})$, S=1, 2, 3, 4..., wherein S represents a number of synchronizations, which accumulates along with the sending of the synchronization information packet.

6. The single-device multi-physiological-parameter synchronization and fusion method according to claim 2, **characterized in that**, the master collection control module (31) initiates one synchronization signal within one synchronization initiation period corresponding to each sensor module (32), and the setting method of the synchronization initiation period $t_{cn}$ comprises:

setting an initial synchronization initiation period, wherein, before the sensor modules (32) start collection, setting is made based on crystal oscillators of the master collection control module (31) and the sensor modules (32);

setting a dynamic synchronization initiation period, wherein, after the sensor modules (32) start collection, when the central processing system (3) detects frequent occurrence of addition or removal of data of sampling points, the central processing system (1) sends a dynamic adjustment instruction to the master collection control module (31).

7. A collection system for a single-device multi-physiological-parameter synchronization and fusion method, **characterized by** comprising:

multiple sensor modules (32), configured for collection and transmission of multiple physiological parameters;

a master collection control module (31) with a synchronization clock unit (311), connected in a wired way to the multiple sensor modules (32) to perform data synchronization alignment and fusion processing on the multiple sensor modules, wherein the synchronization clock unit (311) sends a first synchronization information packet to the multiple sensor modules (32), and the master collection control module (31) performs synchronization alignment and fusion processing on first collection data packets collected by the sensor modules (32) to obtain second collection data packets;

a central processing system (1), configured to set parameters of the multiple sensor modules (32) and the master collection control module (31), send a control instruction to the master collection control module (31) and receive the second collection data packets.

8. The collection system according to claim 7, **characterized in that**,

the first collection data packs comprise data information collected by the sensor modules (32) and a timestamp $T_X$ at the time of data collection; the second collection data packs comprise the collection information and a timestamp $T_Z$ after synchronization fusion processing.

9. The collection system according to claim 7, **characterized in that**,

the master collection control module (31) records a timestamp $T_{S0}$ of sending of a synchronization signal, receives synchronization signal packets from the multiple sensor modules (32), and based on the timestamp $T_{S0}$ and the synchronization signal packets, performs synchronization and fusion processing on the first collection data packets collected by the multiple sensor modules (32) to obtain the second collection data packets.

10. The collection system according to claim 7, **characterized in that**,

the central processing system (1) comprises a data processing module (11) and a first communication module (12), the data processing module (11) is connected with the first communication module (12), the data processing module (11) is configured to perform data alignment processing on the second collection data packets, and the first communication module (12) is wirelessly connected with the master collection control module (31) based on a second communication protocol to send the control instruction and transmit the second collection data packets.

11. The collection system according to claim 7, **characterized in that**,

the master collection control module (31) further comprises:

a first clock source unit (312), configured to generate a corresponding timestamp;
a first data processing unit (313), configured to perform alignment processing on the first collection data packets to generate the second collection data packets based on the time information $T_X$ in the first collection data packets, the timestamp $T_{S0}$ for the master collection control module (31) to initiate synchronization, and the timestamp $T_{SX}$ in a second synchronization information packet;
multiple first data transmitting units (314), configured to transmit and receive the synchronization signal packets and the collection data packets.

12. The collection system according to claim 10, **characterized in that**,

the sensor modules (32) comprise:

at least one on-board sensor (321), disposed on the master collection control module (31);
multiple external probes (322); wherein,
the on-board sensors (321) and the external probes (322) are all connected in a wired way to the first data transmitting units (314); a synchronization channel for transmitting the first synchronization information packet and/or the second synchronization information packet is disposed between the on-board sensors (321) and the master collection control module (31) and between the external probes (322) and the master collection control module (31); multiple synchronization channels are in mutual communication.

13. The collection system according to claim 12, **characterized in that**,

the on-board sensors (321) comprise:

a second clock source unit (3211), configured to generate a corresponding timestamp;
a second data transmitting unit (3212), connected with the first data transmitting unit (314);
a second data processing unit (3213), connected with the second clock source unit (3211) and the second data transmitting unit (3212) to control the second clock source unit (3211) to generate a corresponding timestamp and the second data transmitting unit (3212) to perform data reception and transmission;
the external probes (322) comprise:

a third clock source unit (3221), configured to generate a corresponding timestamp;
a third data transmitting unit (3222), connected with the first data transmitting unit (314);
a third data processing unit (3223), connected with the third clock source unit (3221) and the third data transmitting unit (3222) to control the third clock source unit (3221) to generate a corresponding timestamp and the third data transmitting unit (3222) to perform data reception and transmission.

**14.** A data alignment method of collection data packets, **characterized by** comprising:

constructing a one-to-one wireless transmission system, namely, forming a one-to-one relationship between a central processing system (1) and a master collection control module (31); constructing a one-to-many wired transmission system, namely, constructing a wired connection between the master collection control module (31) and multiple sensor modules (32); wherein, the master collection control module (31) comprises a secondary master clock, and each of the sensor modules (32) comprises a slave clock; at least one synchronization signal channel and one slave clock signal channel for information interaction between the slave clock and the secondary master clock is disposed between the master collection control module (31) and each sensor module (32); selecting an alignment mode, wherein the master collection control module (31) determines and selects a synchronization mode based on received data packet information transmitted by the sensor modules (32); performing data alignment processing, wherein the master collection control module (31) performs data alignment processing on the collection data packets transmitted by the sensor modules (32), through a corresponding alignment mode based on a determination result; receiving and storing the aligned collection data packets, wherein the central processing system (1) receives and stores the aligned collection data packets transmitted by the master collection control module (31).

**15.** The data alignment method according to claim 14, **characterized in that**,

the collection data packets transmitted by the sensor modules (32) comprise a sampling point number, collection data and a slave clock timestamp $T_X$ corresponding to data collection; the master collection control module (31) determines and selects an alignment mode based on the sampling point number in the data packets, which comprises:

setting a determination threshold of the sensor modules (32), wherein, based on historical data, the determination threshold of the collection point number when the collection data packets of the sensor modules (32) lose a time correlation is set; checking the collection point number, wherein the master collection control module (31) checks the information of the collection point number in the collection data packets received in real time and the determination threshold; wherein, if the sampling point number is within a set determination threshold range, the master collection control module (31) aligns the collection data packets based on a difference mapping mode; if the collection point number exceeds the determination threshold, the master collection control module (31) aligns the collection data packets based on a scaling mapping mode.

**16.** The data alignment method according to claim 15, **characterized in that**, aligning the collection data packets based on the difference mapping mode comprises:

sending an alignment information packet, wherein the master collection control module (31) sends a first alignment information packet to each sensor module (32) over a corresponding alignment signal channel in a corresponding alignment initiation period, and records an alignment initiation time $T_{S0}$; transmitting the alignment information packet, wherein the sensor modules (32) collect data and record time information $T_{SX}$ of receiving the first alignment information packet, and generate a second alignment information packet by repackaging and send the second alignment information packet to the master collection control module (31); aligning and calculating the time information of the collection data packets, wherein the master collection control module (31) receives and reads the collection time information $T_X$ in the collection data packets transmitted by the sensor modules (32), and calculates a secondary master clock time $T_x' = T_X - T_{SX} + T_{S0}$ corresponding to the collection data packets based on a mapping formula.

**17.** The data alignment method according to claim 15, **characterized in that**, the master collection control module aligns the collection data packets based on the scaling mapping mode, which comprises:

setting a slave clock signal time interval $T_{xP}$ of each sensor module (32), wherein a corresponding sampling point number set value q is set based on a sampling rate $F_X$ of each sensor module (32), and based on historical data, a time period of the sampling point number set value corresponding to the sensor module (32), namely, the slave clock signal time interval $T_{xP}$ is completed;

sending a slave clock signal, wherein, when the sampling point number accumulated by the sensor module (32) reaches a set value, the sensor module (32) sends one slave clock signal to the master collection control module (31) over the slave clock signal channel; the master collection control module (31) records a corresponding secondary master clock timestamp $T_{xsn}$ at the time of receiving the slave clock signal;

calculating the corresponding secondary master clock time $T'_x$ at the time of the master collection control module (31) receiving the collection data packets to replace the slave clock time $T_X$ of the collection data packets, so as to complete the synchronization of the collection data packets; wherein,

$T'_x = k_X * T_X$, wherein $k_X$ is a clock drift rate of the secondary master clock and the slave clock, and $k_X$= (the sampling rate of the sensor/the true sampling rate of the slave clock corresponding to the secondary master clock).

18. The data alignment method according to claim 17, **characterized in that**, the true sampling rate of the slave clock corresponding to the secondary master clock $F'_x = T'_{xP} * F_x/q$, wherein $T'_{xP}$ is a secondary master clock time interval corresponding to the slave clock; the secondary master clock time interval is

$T'_{xP} = T_{xsn} - T_{xs(n-1)}$, wherein n=1, 2, 3, 4....

19. A multi-device multi-physiological-parameter synchronization device, **characterized by** comprising:

a central processing system (1), a synchronization source sub-system (2), and at least two collection sub-systems (3); wherein, the collection sub-systems (3) comprise a master collection control module (31) and multiple sensor modules (32); the central processing system (1) sends at least one synchronization instruction to the synchronization source sub-system (2); the synchronization source sub-system (2) respectively generates a third synchronization information packet and a first synchronization information packet based on the synchronization instruction, and sends the first synchronization information packet to a synchronization clock unit (311) of the collection sub-systems (3), and the synchronization clock unit (311) sends the first synchronization information packet in a synchronization initiation period; the sensor modules (32) of the collection sub-systems (3) obtain and check the first synchronization information packet and generate a second synchronization information packet based on a check result;

the central processing system (1) obtains the third synchronization information packet and the second synchronization information packet and performs information matching to align collection data packets of the collection sub-systems (3).

20. The multi-device multi-physiological-parameter synchronization device according to claim 19, **characterized in that**, the collection sub-systems (3) check the first synchronization information packet, which comprises the following:

the first synchronization information packet comprises a unique identification code and a synchronization sequence code;

the collection sub-systems (3) check whether the first synchronization information packet contains an agreed unique identification code;

if there is no agreed unique identification code, the collection sub-systems (3) do not respond to the synchronization instruction;

if there is an agreed unique identification code, the collection sub-systems (3) respond to the synchronization instruction, and obtain the synchronization sequence code, and generate the second synchronization information packet in combination with a current time, wherein the second synchronization information packet comprises a synchronization sequence code, a unique identification code, and a second timestamp.

21. The multi-device multi-physiological-parameter synchronization device according to claim 20, **characterized in that**,

the central processing system (1) comprises a data processing module (11) and a first communication module (12);

the data processing module (11) is connected with the first communication module (12), and the synchronization source sub-system (2) and the collection sub-systems (3) are each in signal connection with the first communication module (12); wherein,

the third synchronization information packet comprises a third timestamp, a unique identification code and a synchronization sequence code;

the central processing system (1) determines the synchronism of the third synchronization information packet and the second synchronization information packet by time mapping to align the collection data packets of the collection sub-systems (3).

22. The multi-device multi-physiological-parameter synchronization device according to claim 21, **characterized in that**, the time mapping comprises: based on the third timestamp $T_{S0}$ in the third synchronization information packet and the second timestamp $T_{SX}$ in the second synchronization information packet, calculating a collection timestamp $T_Z$ corresponding to the collection data packets to obtain a synchronization occurrence time of the third synchronization information packet and the second synchronization information packet, and map corresponding timestamp information to the collection data packets.

23. The multi-device multi-physiological-parameter synchronization device according to claim 22, **characterized in that**,

the central processing system (1) performs arrangement storage based on data information of the aligned collection data packets and a parameter configuration of the collection sub-systems (3), wherein,
the parameter configuration of the collection sub-systems (3) comprises at least one of bit number, length, sampling rate and packet transmission rate;
the data information of the aligned collection data packets comprises a stimulation event and/or an environmental variable and/or related physiological parameters.

24. The multi-device multi-physiological-parameter synchronization device according to claim 19, **characterized in that**, the synchronization source sub-system (2) comprises:

a second communication module (21);
a primary master clock (22), configured to initiate the third synchronization information packet and the first synchronization information packet in a set synchronization initiation period.

25. The multi-device multi-physiological-parameter synchronization device according to claim 24, **characterized in that**, the setting method of the synchronization initiation period comprises:

setting an initial synchronization initiation period, wherein, before the collection sub-systems (3) start collection, setting is made based on a crystal oscillator of each corresponding sensor module in the collection sub-systems (3);
setting a dynamic synchronization initiation period, wherein, after the collection sub-systems (3) start collection, when the central processing system (1) detects frequent occurrence of addition or removal of data of sampling points, the central processing system (1) sends a dynamic adjustment instruction to the collection sub-systems (3).

26. The multi-device multi-physiological-parameter synchronization device according to claim 20, **characterized in that**, each collection sub-system (3) comprises:

a third communication module (36);
a slave clock (33), configured to generate a corresponding timestamp.

27. The multi-device multi-physiological-parameter synchronization device according to claim 22, **characterized in that**, the collection sub-systems (3) are one or more of a stimulator, an environmental variable collecting device and a physiological collection device.

28. A multi-device multi-physiological-parameter synchronization method, **characterized by** comprising:

by using the multi-device multi-physiological-parameter synchronization device, constructing a closed-loop wireless transmission system, wherein one-to-one relationship is formed between the central processing system (1) and the synchronization source sub-system (2), a one-to-many relationship is formed between the synchronization source sub-system (2) and multiple collection sub-systems (3), and a many-to-one relationship is formed between the multiple collection sub-systems (3) and the central processing system (1);
initiating a synchronization instruction, wherein the central processing system (1) initiates a synchronization instruction to the synchronization source sub-system (2); after receiving the synchronization instruction, the synchronization source sub-system (2), at the same time, sends a third synchronization information packet to the central processing system (1), and sends a first synchronization information packet to the multiple collection sub-systems (3);
checking information, wherein the multiple collection sub-systems (3) receive the first synchronization information packet and then check information, generate a second synchronization information packet after validating a check result, and transmit the second synchronization information packet to the central processing system (1);
matching information, wherein the central processing system (1) performs information matching on the third synchronization information packet and the second synchronization information packet;

adjusting a synchronization initiation period, wherein the initiation period for the synchronization instruction is adjusted dynamically based on a matching result.

29. An offline collection device, **characterized by** comprising:

a multi-device multi-physiological-parameter synchronization device; wherein,

the synchronization source sub-system (2) further comprises a second data storing module (24);

the collection sub-systems (3) further comprise a third data storing module (35);

the central processing system (1) sends only one synchronization instruction to the synchronization source sub-system (2) at the time of initial setting, and stores the one synchronization instruction in the second data storing module (24) to set the one synchronization instruction as a synchronization instruction for the synchronization source sub-system (2);

the third data storing module (35) is configured to store collection data packets and a second synchronization information packet.

30. The offline collection device according to claim 29, **characterized in that**, the central processing system (1) obtains locally-stored data of the second data storing module (24) and the third data storing module (35) to perform data processing and alignment.

31. An offline data collection method of the offline collection device, **characterized by** comprising:

setting a synchronization instruction, wherein, at initial setting, the synchronization instruction of the synchronization source sub-system (2) is set by the central processing system (1);

constructing a synchronous transmission system, wherein a one-to-many relationship is formed between the synchronization source sub-system (2) and the multiple collection sub-systems (3);

initiating a synchronization action, wherein the synchronization source sub-system (2) initiates a synchronization action to form a third synchronization information packet and a first synchronization information packet, the synchronization source sub-system (2) locally stores a third synchronization information packet, and sends the first synchronization information packet to the synchronization clock unit of the multiple collection sub-systems (3), and the synchronization clock unit then sends the first synchronization information packet in a synchronization initiation period;

checking information, wherein the sensor modules of the multiple collection sub-systems (3) receive the first synchronization information packet and then check information, and generate a second synchronization information packet after validating a check result, and the multiple collection sub-systems (3) locally store the second synchronization information packet.

[FIG. 1]

```
                                              ┌── S11
┌─────────────────────────────────┐
│   constructing a one-to-one     │
│   wireless transmission system  │
└─────────────────────────────────┘
                 │
                 ▼                            ┌── S12
┌─────────────────────────────────┐
│   constructing a one-to-many    │
│    wired transmission system    │
└─────────────────────────────────┘
                 │
                 ▼                            ┌── S13
┌─────────────────────────────────┐
│   initiating a synchronization  │
│           instruction           │
└─────────────────────────────────┘
                 │
                 ▼                            ┌── S14
┌─────────────────────────────────┐
│      checking information       │
└─────────────────────────────────┘
                 │
                 ▼                            ┌── S15
┌─────────────────────────────────┐
│      matching information       │
└─────────────────────────────────┘
```

[FIG. 2]

```
                        ┌──────────────────────┐
                        │ Synchronization starts│
                        └──────────────────────┘
                                    │
  ┌───────────────────────────────────────────────┐        ┌────────────────────────────────┐
  │ The central processing system configures      │        │ Each sensor module collects and │
  │ parameter configuration information of the     │───────►│ transmits first collection data │
  │ sensor modules                                 │        │ packets                         │
  └───────────────────────────────────────────────┘        └────────────────────────────────┘
                                    │                                       │
  ┌───────────────────────────────────────────────┐        ┌────────────────────────────────┐
  │ The central processing system starts each      │        │ Each sensor module waits to     │
  │ sensor module and sends a synchronization      │        │ receive the first synchronization│
  │ instruction                                    │        │ information packet sent by the  │
  └───────────────────────────────────────────────┘        │ synchronization clock unit      │
                                    │                       └────────────────────────────────┘
  ┌───────────────────────────────────────────────┐                        │
  │ The synchronization clock unit waits for a     │
  │ synchronization instruction for initiating     │
  │ synchronization                                │
  └───────────────────────────────────────────────┘

   NO            Determine whether the                       The sensor modules check whether    NO
       ◄─────    synchronization clock unit sends the         to perform processing action    ─────►
                 first synchronization information
                 packet
                         YES                                               YES

  ┌───────────────────────────────────────────────────────────────────────────┐
  │ The master collection control module performs information matching to       │
  │ align first collection data packets of the sensor modules                   │
  └───────────────────────────────────────────────────────────────────────────┘
                                    │
  ┌───────────────────────────────────────────────────────────────────────────┐
  │ The synchronization initiation period is dynamically adjusted               │
  └───────────────────────────────────────────────────────────────────────────┘
                                    │
  ┌───────────────────────────────────────────────────────────────────────────┐
  │ The master collection control module sends second collection data packets   │
  │ formed by synchronization alignment to the central processing system        │
  └───────────────────────────────────────────────────────────────────────────┘
                                    │
                        ┌──────────────────────┐
                        │ Synchronization ends  │
                        └──────────────────────┘
```

[FIG. 3]

secondary master clock     first slave clock     second slave clock

$T_{00} = 0$

$T_{20} = 0$

preparation stage

$T_{10} = 0$

synchronization signal   $T_{0R} = 7336$   $T_{01} = 7336$    $T_{1R} = 4985$   $T_{11} = 4985$    $T_{2R} = 6978$   $T_{21} = 6978$

$T_{0R} = 0$     $T_{1R} = 0$     $T_{2R} = 0$

first synchronization period

synchronization signal   $T_{0R} = 10000$   $T_{02} = 17336$    $T_{1R} = 9999$   $T_{12} = 14984$    $T_{2R} = 10001$   $T_{22} = 16979$

$T_{0R} = 0$     $T_{1R} = 0$     $T_{2R} = 0$

timeline

second Synchronization period

synchronization signal   $T_{0R} = 10000$   $T_{03} = 27336$    $T_{1R} = 9999$   $T_{13} = 24983$    $T_{2R} = 10001$   $T_{23} = 26980$

$T_{0R} = 0$     $T_{1R} = 0$     $T_{2R} = 0$

third synchronization period

synchronization signal   $T_{0R} = 10000$   $T_{04} = 37336$    $T_{1R} = 9999$   $T_{14} = 34982$    $T_{2R} = 10001$   $T_{24} = 36981$

$T_{0R} = 0$     $T_{1R} = 0$     $T_{2R} = 0$

fourth synchronization period

collection stopped

$T_{0R} = 7039$   $T_0 = 44375$

$T_{1R} = 8768$   $T_1 = 43750$

$T_{2R} = 10139$   $T_2 = 47120$

[FIG. 4]

[FIG. 5]

EP 4 769 061 A1

[FIG. 6]

```
                                                      B1
constructing a one-to-one wireless
       transmission system

                                                      B2
constructing a one-to-many wired
       transmission system

                                                      B3
    selecting a synchronization mode

                                                      B4
  performing data synchronization
             processing

                                                      B5
        receiving and storing the
  synchronized collection data packets
```

[FIG. 7]

```
                                                      C1
sending the synchronization information
                packet

                                                      C2
    transmitting the synchronization
          information packet

                                                      C3
synchronizing and calculating the time
information of the collection data packets
```

[FIG. 8]

| | C1' |
|---|---|
| setting a slave clock signal time interval TxP of each sensor module | |

$\downarrow$

| | C2' |
|---|---|
| sending a slave clock signal | |

$\downarrow$

| | C3' |
|---|---|
| calculating a corresponding secondary master clock time Tx' at the time of the master collection control module receiving the collection data packets | |

[FIG. 9]

start collection

secondary master clock timing sequence

first slave clock starts collection T₁ᵣ=0 secondary master clock timestampT₁ₛₒ=337

second slave clock starts collection T₂ᵣ=0 secondary master clock timestampT₂ₛₒ=837

first slave clock synchronization information T₁ᵣ=10000 secondary master clock timestamp T₁ₛₒ=10338

second slave clock synchronization information T₂ᵣ=10000 secondary master clock timestamp T₂ₛₒ=10836

timeline

first slave clock synchronization information T₁ᵣ=20000 secondary master clock timestamp T₁ₛₒ=20339

second slave clock synchronization information T₂ᵣ=20000 secondary master clock timestamp T₂ₛₒ=20835

first slave clock synchronization information T₁ᵣ=30000 secondary master clock timestamp T₁ₛₒ=30340

second slave clock synchronization information T₂ᵣ=30000 secondary master clock timestamp T₂ₛₒ=30834

first slave clock synchronization information T₁ᵣ=40000 secondary master clock timestamp T₁ₛₒ=40341

second slave clock synchronization information T₂ᵣ=40000 secondary master clock timestamp T₂ₛₒ=40833

stop collection

first slave clock stops collection T₁ᵣ=41350 secondary master clock timestamp T₁ₛₒ=41691

second slave clock stops collection T₂ᵣ=41270 secondary master clock timestamp T₂ₛₒ=42103

[FIG. 10]

sampling rate of the first slave clock

elapsing speed of time on the secondary master clock

sampling rate of the second slave clock

sampling rate of the first slave clock (after compression)

sampling rate of the second slave clock (after stretching)

compression

stretching

[FIG. 11]

[FIG. 12]

[FIG. 13]

[FIG. 14]

[FIG. 15]

```
                                              ⌐S21
         ┌─────────────────────────────┐
         │    constructing a closed-loop    │
         │  wireless transmission system   │
         └─────────────────────────────┘
                        │
                        ▼                     ⌐S22
         ┌─────────────────────────────┐
         │    initiating a synchronization  │
         │           instruction            │
         └─────────────────────────────┘
                        │
                        ▼                     ⌐S223
         ┌─────────────────────────────┐
         │      checking information        │
         └─────────────────────────────┘
                        │
                        ▼                     ⌐S224
         ┌─────────────────────────────┐
         │      matching information        │
         └─────────────────────────────┘
                        │
                        ▼                     ⌐S225
         ┌─────────────────────────────┐
         │   adjusting a synchronization    │
         │        initiation period         │
         └─────────────────────────────┘
```

[FIG. 16]

primary and secondary

| start collection | master clocks | first slave clock | second slave clock |
|---|---|---|---|

$T_{00} = 0$

$T_{20} = 0$

**preparation**

**stage**

$T_{10} = 0$

synchronization    $T_{0R} = 7336$ · $T_{01} = 7336$    $T_{1R} = 4985$ · $T_{11} = 4985$    $T_{2R} = 6978$ · $T_{21} = 6978$

code 1    $T_{0R} = 0$    $T_{1R} = 0$    $T_{2R} = 0$

**first**

**synchronization**

**period**

synchronization    $T_{0R} = 10000$ · $T_{02} = 17336$    $T_{1R} = 9999$ · $T_{12} = 14984$    $T_{2R} = 10001$    $T_{22} = 16979$

code 2    $T_{0R} = 0$    $T_{1R} = 0$    $T_{2R} = 0$

**second**

**synchronization**

**period**

synchronization    $T_{0R} = 10000$ · $T_{03} = 27336$    $T_{1R} = 9999$ · $T_{13} = 24983$    $T_{2R} = 10001$    $T_{23} = 26980$

code 3    $T_{0R} = 0$    $T_{1R} = 0$    $T_{2R} = 0$

**third**

**synchronization**

**period**

synchronization    $T_{0R} = 10000$ · $T_{04} = 37336$    $T_{1R} = 9999$ · $T_{14} = 34982$    $T_{2R} = 10001$    $T_{24} = 36981$

code 4    $T_{0R} = 0$    $T_{1R} = 0$    $T_{2R} = 0$

**fourth**

**synchronization**

**period**

stop collection

$T_{0R} = 7039$ · $T_0 = 44375$

$T_{1R} = 8768$ · $T_1 = 43750$

$T_{2R} = 10139$ · $T_2 = 47120$

timeline

[FIG. 17]

```
                    ┌─────────────────────────────┐  A1
                    │  setting a synchronization  │
                    │         instruction         │
                    └─────────────────────────────┘
                                   │
                                   ▼
                    ┌─────────────────────────────┐  A2
                    │  constructing a synchronous │
                    │      transmission system    │
                    └─────────────────────────────┘
                                   │
                                   ▼
                    ┌─────────────────────────────┐  A3
                    │  initiating a synchronization│
                    │            action           │
                    └─────────────────────────────┘
                                   │
                                   ▼
                    ┌─────────────────────────────┐  A4
                    │     checking information    │
                    └─────────────────────────────┘
                                   │
                                   ▼
                    ┌─────────────────────────────┐  A5
                    │       data aggregation      │
                    └─────────────────────────────┘
```

[FIG. 18]

## INTERNATIONAL SEARCH REPORT

| International application No. |
|---|
| **PCT/CN2024/120676** |

### A.    CLASSIFICATION OF SUBJECT MATTER

G06F1/12(2006.01)i

According to International Patent Classification (IPC) or to both national classification and IPC

### B.    FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 生理, 参数, 时间戳, 传感器, 校验, 同步, 融合, 采集, 数据包, physiology, parameter, time, stamp, sensor, check, synchronization, fusion, data, package

### C.    DOCUMENTS CONSIDERED TO BE RELEVANT

| Category* | Citation of document, with indication, where appropriate, of the relevant passages | Relevant to claim No. |
|---|---|---|
| PX | CN 116991200 A (NEURACLE TECHNOLOGY (CHANGZHOU) CO., LTD.) 03 November 2023 (2023-11-03) claims 1-13 | 1-31 |
| PX | CN 116991201 A (NEURACLE TECHNOLOGY (CHANGZHOU) CO., LTD.) 03 November 2023 (2023-11-03) claims 1-18 | 1-31 |
| A | CN 106332268 A (NEURACLE TECHNOLOGY (CHANGZHOU) CO., LTD.) 11 January 2017 (2017-01-11) claim 1 | 1-31 |
| A | CN 113143290 A (XI'AN ZHENTEC INTELLIGENT TECHNOLOGY CO., LTD.) 23 July 2021 (2021-07-23) entire document | 1-31 |
| A | US 2022322260 A1 (CRYSTAL INSTRUMENTS CORP.) 06 October 2022 (2022-10-06) entire document | 1-31 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 November 2024** | **14 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/120676**

| Patent document cited in search report | | | Publication date (day/month/year) | Patent family member(s) | | | Publication date (day/month/year) |
|---|---|---|---|---|---|---|---|
| CN | 116991200 | A | 03 November 2023 | None | | | |
| CN | 116991201 | A | 03 November 2023 | None | | | |
| CN | 106332268 | A | 11 January 2017 | None | | | |
| CN | 113143290 | A | 23 July 2021 | None | | | |
| US | 2022322260 | A1 | 06 October 2022 | US | 2022322259 | A1 | 06 October 2022 |
| | | | | US | 11956744 | B2 | 09 April 2024 |
| | | | | US | 11611946 | B2 | 21 March 2023 |

Form PCT/ISA/210 (patent family annex) (July 2022)

**EP 4 769 061 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311258830X

- CN 202311258934